(19) Europäisches Patentamt
European Patent Office
Office européen des brevets

(11) **EP 4 350 807 A1**

(12) **EUROPEAN PATENT APPLICATION**
published in accordance with Art. 153(4) EPC

(43) Date of publication:
**10.04.2024 Bulletin 2024/15**

(51) International Patent Classification (IPC):
**H01M 4/139** (2010.01)   **H01M 4/62** (2006.01)
**H01M 10/052** (2010.01)   **H01M 10/0562** (2010.01)

(21) Application number: **22810870.0**

(22) Date of filing: **18.02.2022**

(52) Cooperative Patent Classification (CPC):
**H01M 4/622; H01M 4/13; H01M 4/139; H01M 4/62;**
**H01M 4/625; H01M 10/052; H01M 10/0525;**
**H01M 10/0562; H01M 10/0565;** Y02E 60/10

(86) International application number:
**PCT/JP2022/006554**

(87) International publication number:
**WO 2022/249589 (01.12.2022 Gazette 2022/48)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.05.2021 JP 2021089546**

(71) Applicant: **Panasonic Intellectual Property**
**Management Co., Ltd.**
**Kadoma-shi, Osaka 571-0057 (JP)**

(72) Inventors:
• **TAMURA, Takaaki**
**Tokyo 103-0022 (JP)**
• **OSHIMA, Tatsuya**
**Tokyo 103-0022 (JP)**

(74) Representative: **Grünecker Patent- und**
**Rechtsanwälte**
**PartG mbB**
**Leopoldstraße 4**
**80802 München (DE)**

(54) **ELECTRODE MATERIAL, ELECTRODE MATERIAL MANUFACTURING METHOD, AND BATTERY**

(57)    The electrode material in an aspect of the present disclosure includes an active material, a conductive fiber including a carbon material, and a binder including an elastomer. The elastomer is a hydrogenated product and includes a repeating unit having an aromatic ring. The content rate of the repeating unit in the elastomer is 15 mass% or more.

FIG. 1

**Description**

Technical Field

The present disclosure relates to an electrode material, a method for manufacturing an electrode material, and a battery.

Background Art

In general, an active material layer of an electrode contains a conductive assistant for the purposes of improving the electron conductivity in the active material layer and improving the cycle characteristics of a battery. The active material layer is made of, for example, an electrode material including an active material and a conductive assistant. PTLs 1 and 2 disclose electron materials including carbon materials as conductive assistants.

Citation List

Patent Literature

PTL 1: Japanese Unexamined Patent Application Publication No. 2011-134675
PTL 2: Japanese Unexamined Patent Application Publication No. 2020-145034

Summary of Invention

Technical Problem

The present disclosure aims to provide an electrode material suitable for producing an electrode with improved electron conductivity.

Solution to Problem

An electrode material in one aspect of the present disclosure includes

an active material,
a conductive fiber including a carbon material, and
a binder including an elastomer,
wherein
the elastomer is a hydrogenated product and includes a repeating unit having an aromatic ring, and
the content rate of the repeating unit in the elastomer is 15 mass% or more. Advantageous Effects of Invention

The present disclosure provides an electrode material suitable for producing an electrode with improved electron conductivity.

Brief Description of Drawings

[Fig. 1] Fig. 1 is a schematic diagram of an electrode material according to an embodiment 1.
[Fig. 2] Fig. 2 is a diagram showing examples of elastomer.
[Fig. 3] Fig. 3 is a flow chart showing an example of a method for manufacturing an electrode material.
[Fig. 4] Fig. 4 is a flow chart showing another example of a method for manufacturing an electrode material.
[Fig. 5] Fig. 5 is a flow chart showing another example of a method for manufacturing an electrode material.
[Fig. 6] Fig. 6 is a flow chart showing another example of a method for manufacturing an electrode material.
[Fig. 7] Fig. 7 is a flow chart showing another example of a method for manufacturing an electrode material.
[Fig. 8] Fig. 8 is a cross-sectional view of a battery according to an embodiment 2.
[Fig. 9] Fig. 9 is a flow chart showing a method for manufacturing an electrode material of Comparative Example 4.

Description of Embodiments

(Underlying Knowledge Forming Basis of the Present Disclosure)

In the field of conventional secondary batteries, organic electrolytic solutions obtained by dissolving electrolyte salts in organic solvents are mainly used. In secondary batteries using organic electrolytic solutions, there is concern about liquid linkage. It has also been pointed out that a large amount of heat is generated when a short circuit or the like occurs.

On the other hand, all-solid-state secondary batteries using inorganic solid electrolytes instead of organic electrolytic solutions are attracting attention. All-solid-state secondary batteries do not cause liquid leakage. Since the thermal stability of inorganic solid electrolytes is high, it is expected that heat generation when a short circuit or the like occurs is suppressed.

In an all-solid-state secondary battery, an electrode tends to expand or contract as the battery is charged and discharged. In particular, when the electrode is a negative electrode, the expansion or contraction of the electrode tends to significantly occur. According to the study by the present inventors, conductive fibers such as a carbon nanotube (CNT) can easily maintain percolation in the electrode even if the expansion or contraction of the electrode occurs. Accordingly, it can be said that the conductive fiber is suitable as a conductive assistant that improves the conductivity of an electrode.

However, the conductive fiber such as a CNT tends to readily aggregate. Accordingly, in order to secure desired conductivity, the electrode is required to correspond by increasing the amount of the conductive fiber to be added to the electrode material or to correspond by adding a dispersant to the electrode material. However, an increase in the amount of the conductive fiber causes a decrease in the energy density of the battery, a decrease in the ion conductivity in the electrode, and so on, which tends to decrease the performance of the battery. When a dispersant is added to the electrode material, the performance of the battery may decrease by reaction of the polar group included in the dispersant and the solid electrolyte. Furthermore, the dispersant also tends to reduce the adhesion between an active material layer and a current collector in the electrode and to reduce the strength of the active material layer.

PTL 2 discloses production of an electrode material by adding a solid electrolyte and an active material to a slurry including a conductive assistant. However, in this method, when a conductive fiber is used as the conductive assistant, it is difficult to uniformly disperse the conductive assistant in the electrode material. PTL 2 does not describe nor suggest a method for improving the dispersibility of the conductive fiber.

The present inventors have diligently studied and, as a result, have newly found that the dispersibility of a conductive fiber in an electrode material changes by using a specific binder instead of the dispersant. The present inventors have proceeded with the study based on the newly found knowledge and found that the dispersibility of a conductive fiber in an electrode material is improved by combining a specific elastomer and the conductive fiber and that the electron conductivity in an electrode formed from this electrode material is improved. Thus, the electrode material of the present disclosure has been accomplished.

(Overview of one aspect of the present disclosure)

An electrode material according to a 1st aspect of the present disclosure includes

an active material,
a conductive fiber including a carbon material, and
a binder including an elastomer,
wherein
the elastomer is a hydrogenated product and includes a repeating unit having an aromatic ring, and
the content rate of the repeating unit in the elastomer is 15 mass% or more.

According to the 1st aspect, the binder tends to be adsorbed to the conductive fiber by the interaction between the aromatic ring included in the elastomer and the carbon material included in the conductive fiber. This interaction is, for example, $\pi$-$\pi$ interaction. The binder adsorbed to the conductive fiber can promote the dispersion of the conductive fiber in the electrode material. Consequently, the dispersibility of the conductive fiber in the electrode material is improved. Such an electrode material is suitable for producing an electrode with improved electron conductivity. Particularly, even if the amount of the conductive fiber is small, the electrode can be provided with desired electron conductivity.

In a 2nd aspect of the present disclosure, for example, in electrode material according to the 1st aspect, the conductive fiber may include a carbon nanotube.

According to the 2nd aspect, the electrode material is suitable for producing an electrode with improved electron conductivity.

In a 3rd aspect of the present disclosure, for example, in the electrode material according to the 1st or 2nd aspect, the conductive fiber may have an average fiber diameter of 300 nm or less.

According to the 3rd aspect, since the average fiber diameter of the conductive fiber is small, the number of the conductive fiber can be increased while maintaining the amount of the conductive fiber. According to such a conductive fiber, the effect of improving the conductivity in the electrode is high. In general, when the conductive fiber has a small average fiber diameter, the cohesive force of the conductive fiber increases, and the dispersibility of the conductive fiber tends to decrease. However, the binder included in the electrode material significantly causes an effect of improving the dispersibility of the conductive fiber when the average fiber diameter of the conductive fiber is small.

In a 4th aspect of the present disclosure, for example, in the electrode material according to any one of the 1st to 3rd aspects, the elastomer may be a thermoplastic elastomer.

According to the 4th aspect, the binder can efficiently disperse the conductive fiber in the electrode material.

In a 5fh aspect of the present disclosure, for example, in the electrode material according to any one of the 1st to 4th aspects, the elastomer may include a first block including the repeating unit having the aromatic ring and a second block including a repeating unit derived from a conjugated diene.

According to the 5th aspect, the binder can efficiently disperse the conductive fiver in the electrode material.

In a 6th aspect of the present disclosure, for example, in the electrode material according to any one of the 1st to 5th aspects, the repeating unit having the aromatic ring may include a repeating unit derived from styrene.

According to the 6th aspect, the binder can efficiently disperse the conductive fiber in the electrode material.

In a 7th aspect of the present disclosure, for example, in the electrode material according to any one the 1st to 6th aspects, the elastomer may include at least one selected from the group consisting of a styrene-ethylene/butylene-styrene block copolymer (SEBS) and a styrene-ethylene/ethylene/propylene-styrene block copolymer (SEEPS).

According to the 7th aspect, the binder can efficiently disperse the conductive fiber in the electrode material.

In an 8th aspect of the present disclosure, for example, in the electrode material according to any one of the 1st to 7th aspects, the hydrogenation rate of the elastomer may be 90% or more.

According to the 8th aspect, the degree of freedom of rotation of the molecular chain of the elastomer is improved. The binder including this elastomer tends to be more adsorbed to the conductive fiber. Accordingly, this binder significantly causes an effect of improving the dispersibility of the conductive fiber.

In a 9th aspect of the present disclosure, for example, in the electrode material according to any one of the 1st to the 8th aspects, the content rate of the repeating unit having the aromatic ring in the elastomer may be 20 mass% or more.

According to the 9th aspect, the amount of the aromatic ring that can interact with the carbon material in the elastomer is large. Accordingly, the binder including this elastomer tends to be more easily adsorbed to the conductive fiber. According to this binder, the effect of dispersing the conductive fiber is improved.

In a 10th aspect of the present disclosure, for example, the electrode material according to any one of the 1st to 9th aspects may further include a solid electrolyte.

According to the 10th aspect, the electrode material is suitable for producing an electrode of a solid battery.

In an 11th aspect of the present disclosure, for example, in the electrode material according to the 10th aspect, the solid electrolyte may have lithium-ion conductivity.

According to the 11th aspect, the electrode formed from the electrode material can increase the energy density of the lithium-ion battery including the solid electrolyte and also can improving the cycle characteristics of the battery.

In a 12th aspect of the present disclosure, for example, the electrode material according to any one of the 1st to the 11th aspects may further include a solvent.

According to the 12th aspect, the binder can efficiently disperse the conductive fiber in the electrode material.

A method for manufacturing an electrode material according to a 13th aspect of the present disclosure is a method for manufacturing the electrode material according to any one of the 1st to the 12th aspects, and the manufacturing method includes producing a slurry including the conductive fiber and the binder.

According to the 13th aspect, the conductive fiber is dispersed in the slurry. In the electrode material produced using this slurry, the dispersibility of the conductive fiber tends to be improved. In the electrode formed from this electrode material, an electronic conduction path between active material molecules also tends to be formed. According to this electrode material, even if the amount of the conductive fiber is small, the electrode can be provided with desired electron conductivity.

In a 14th aspect of the present disclosure, for example, the manufacturing method according to the 13th aspect may further include mixing the slurry including the conductive fiber and the binder with a slurry including at least one selected from the group consisting of an active material and a solid electrolyte.

According to the 14th aspect, in the slurry including at least one selected from the group consisting of an active material and a solid electrolyte, the active material or the solid electrolyte is dispersed. In the electrode material obtained by mixing this slurry with a slurry including a conductive fiber and a binder tends to more improve the dispersibility the conductive fiber.

A battery according to a 15th aspect of the present disclosure includes

a positive electrode,
a negative electrode, and
an electrolyte layer located between the positive electrode and the negative electrode,
wherein
at least one selected from the group consisting of the positive electrode and the negative electrode includes an active material, a conductive fiber including a carbon material, and a binder including elastomer,
the elastomer is a hydrogenated product and includes a repeating unit having an aromatic ring, and
the content rate of the repeating unit in the elastomer is 15 mass% or more.

According to the 15th aspect, in the positive electrode or the negative electrode, the electron conductivity is improved. Accordingly, in the battery, not only the energy density is high, but also the cycle characteristics tend to be excellent.

In a 16th aspect of the present disclosure, for example, in the battery according to the 15th aspect, the electrolyte layer may include a solid electrolyte.

According to the 16th aspect, in the battery, not only the energy density is high, but also the cycle characteristics tend to be excellent.

Embodiments of the present disclosure will now be described with reference to the drawings.

(Embodiment 1)

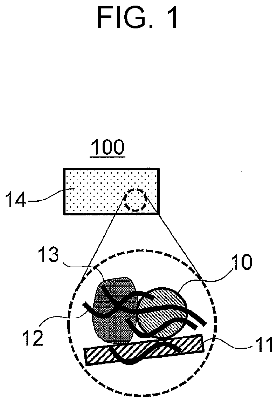

Fig. 1 shows a schematic diagram of an electrode material 100 according to an embodiment 1. The electrode material 100 in the embodiment 1 includes an active material 10, a conductive fiber 11, and a binder 12. The conductive fiber 11 includes a carbon material. The binder 12 includes elastomer E. The elastomer E is a hydrogenated product and includes a repeating unit having an aromatic ring. The content rate of the repeating unit having an aromatic ring in the elastomer E is 15 mass% or more.

In the electrode material 100 according to the embodiment 1, the binder 12 tends to be adsorbed to the conductive fiber 11 due to the configuration above. The binder 12 adsorbed to the conductive fiber 11 can promote the dispersion of the conductive fiber 11 in the electrode material 100. Consequently, in the electrode material 100, the dispersibility of the conductive fiber 11 is improved. Such an electrode material 100 is suitable for producing an electrode with improved electron conductivity.

As described above, the electrode material 100 includes an active material 10, a conductive fiber 11, and a binder 12. The electrode material 100 may further include a solid electrolyte 13, a solvent 14, or the like. These materials are described in detail below.

[Active material]

In the embodiment 1, the active material 10 is a positive electrode active material or a negative electrode active material. The active material 10 may be a negative electrode active material. When the active material 10 is a positive electrode active material, the positive electrode can be produced from the electrode material 100. When the active material 10 is a negative electrode active material, the negative electrode can be produced from the electrode material 100.

The positive electrode active material is, for example, a material that has a property of occluding and releasing metal ions (for example, lithium ions). Examples of the positive electrode active material include a lithium-containing transition metal oxide, a transition metal fluoride, a polyanionic material, a fluorinated polyanionic material, a transition metal sulfide, a transition metal oxysulfide, and a transition metal oxynitride. Examples of the lithium-containing transition metal oxide include $Li(Ni,Co,Al)O_2$, $Li(Ni,Co,Mn)O_2$, and $LiCoO_2$. When a lithium-containing transition metal oxide is used as the active material 10, the manufacturing cost of the positive electrode can be reduced, and the average discharge voltage of the battery can be improved.

The negative electrode active material is, for example, a material that has a property of occluding and releasing metal ions (for example, lithium ions). Examples of the negative electrode active material include a metal material, a carbon material, an oxide, a nitride, a tin compound, and a silicon compound. The metal material may be a single metal or an alloy. Examples of the metal material include a lithium metal and a lithium alloy. Examples of the carbon material include natural graphite, coke, graphitizing carbon, spherical carbon, artificial graphite, and amorphous carbon. The capacity density of the batter can be improved by using silicon (Si), tin (Sn), a silicon compound, a tin compound, or the like as the active material 10.

The active material 10 may have a median diameter of 0.1 $\mu$m or more and 100 $\mu$m or less. When the median diameter of the active material is 0.1 $\mu$m or more, the active material 10 and the solid electrolyte 13 can be well dispersed in the electrode formed from the electrode material 100. Accordingly, the charge and discharge characteristics of the batter using this electrode are improved. When the active material 10 has a median diameter of 100 $\mu$m or less, the lithium diffusion speed in the active material is improved. Accordingly, the battery using the electrode formed from the electrode material 100 can operate at high output.

The median diameter means the particle diameter at which the accumulated volume in a volume-based particle size distribution is equal to 50%. The volume-based particle size distribution is determined by a laser diffraction scattering method. The same is applied to other materials below.

In the electrode material 100, the volume ratio of the active material 10 and the solid electrolyte 13, "v1:100-v1" may satisfy $30 \leq v1 \leq 95$, where v1 indicates the volume ratio of the active material 10 when the total volume of the active material 10 and the solid electrolyte 13 included in the electrode material 100 is defined as 100. When $30 \leq v1$ is satisfied, the battery easily secures a sufficient energy density. When $v1 \leq 95$ is satisfied, the battery can more easily operate at high output.

The active material 10 may be covered with a covering material in order to reduce the interface resistance with the solid electrolyte 13. As the covering material, a material having low electron conductivity can be used. As the covering material, for example, an oxide material or an oxide solid electrolyte can be used.

As the oxide material that can be used as the covering material, $SiO_2$, $Al_2O_3$, $TiO_2$, $B_2O_3$, $Nb_2O_5$, $WO_3$, $ZrO_2$, or the like can be used.

As the oxide solid electrolyte that can be used as the covering material, for example, Li-Nb-O compounds such as $LiNbO_3$, Li-B-O compounds such as $LiBO_2$ and $Li_3BO_3$, Li-Al-O compounds such as $LiAlO_2$, Li-Si-O compounds such as $Li_4SiO_4$, Li-S-O compounds such as $Li_2SO_4$, Li-Ti-O compounds such as $Li_4Ti_5O_{12}$, Li-Zr-O compounds such as $Li_2ZrO_3$, Li-Mo-O compounds such as $Li_2MoO_3$, Li-V-O compounds such as $LiV_2O_5$, and Li-W-O compounds such as $Li_2WO_4$ can be used. The oxide solid electrolyte has high ion conductivity and high high-potential stability. Accordingly, the charge and discharge efficiency of the battery can be more improved by using the oxide solid electrolyte as the covering material.

[Conductive fiber]

In the embodiment 1, examples of the conductive fiber 11 including a carbon material include a carbon nanotube (CNT), a carbon fiber, and a vapor grown carbon fiber. These conductive fibers 11 may be used alone or may be used in combination of two or more thereof. The conductive fiber 11 includes, for example, a CNT.

The CNT is a cylindrical hollow fiber constituted of a graphene sheet. The CNT may be a monolayer carbon nanotube constituted of one graphene sheet (SWCNT: singlewalled carbon nanotube) or may be a multilayer carbon nanotube constituted of a plurality of graphene sheets (MWCNT: multi-walled carbon nanotube). Examples of the SWCNT include TUBALL (registered trademark). In the MWCNT, the plurality of graphene sheets are, for example, arranged concentrically. Examples of the MWCNT include VGCF (registered trademark)-H.

The average fiber diameter of the conductive fiber 11 is, for example, 500 nm or less and may be 300 nm or less, 200 nm or less, 150 nm or less, 100 nm or less, 50 nm or less, 10 nm or less, or 5 nm or less. The smaller the average fiber diameter of the conductive fiber 11, the greater the number of the conductive fiber 11 that can be used while maintaining the amount of the conductive fiber 11. According to the conductive fiber 11 with a small average fiber diameter, the conductivity in the electrode can be easily improved. The lower limit of the average fiber diameter of the conductive fiber 11 is not particularly limited and is, for example, 0.1 nm.

The average fiber diameter of the conductive fiber 11 can be specified by the following method. First, a conductive fiber 11 that is used as a raw material for producing an electrode material 100 is provided as a measurement sample. The measurement sample may be an electrode material 100. Then, the measurement sample is observed with a transmission electron microscope. The outer diameters of a specific conductive fiber 11 in the obtained electron microscopic image are measured at arbitrary multiple points (e.g., 10 points). The average of the obtained measured values is regarded as the fiber diameter of the conductive fiber 11. The fiber diameters of arbitrary number (e.g., 10) of conductive fiber 11 are respectively calculated, and the average of the calculated values can be regarded as the average fiber diameter of the conductive fiber 11.

The average length of the conductive fiber 11 is not particularly limited and is, for example, 1 $\mu$m or more and may be 5 $\mu$m or more. The average length of the conductive fiber 11 may be 500 $\mu$m or less, 250 $\mu$m or less, 100 $\mu$m or less, 50 $\mu$m or less, or 10 $\mu$m or less.

The average length of the conductive fiber 11 can be specified by the following method. First, a measurement sample described above for the average fiber diameter is provided. Then, the measurement sample is observed with a transmission electron microscope. The length of a specific conductive fiber 11 in the obtained electron microscopic image is measured. The lengths of arbitrary number (e.g., 10) of conductive fiber 11 are respectively calculated, and the average of the calculated values can be regarded as the average length of the conductive fiber 11.

The aspect ratio which is calculated as a ratio of the average length to the average fiber diameter of the conductive fiber 11 is not particularly limited and is, for example, 2 or more and 50,000 or less and may be 5 or more and 20,000 or less or 10 or more and 10,000 or less. The aspect ratio of the conductive fiber 11 may be higher than 1,000 or 3,000 or more in some cases.

The conductive fiber 11 includes, for example, a carbon material as a main component. The "main component" means a component that is mostly included in the conductive fiber 11 in mass ratio. The conductive fiber 11, for example, substantially consists of a carbon material. "Substantially consisting of something" means exclusion of other components that modify the essential characteristics of the material referred to.

[Binder]

As described above, the binder 12 includes an elastomer E. In the present disclosure, the elastomer means a polymer having elasticity. The elastomer E is a hydrogenated product. For example, in the elastomer E, a carbon-carbon double bond is changed to a single bond by hydrogenation. Furthermore, the elastomer E includes a repeating unit having an aromatic ring. The repeating unit means a molecular structure derived from a monomer and may also be called a constituent unit. The content rate of the repeating unit having an aromatic ring in the elastomer E is 15 mass% or more.

In the present disclosure, the aromatic ring means a ring structure having aromaticity. Examples of the aromatic ring included in the elastomer E include benzene aromatic rings such as a benzene ring and a naphthalene ring; non-benzene aromatic rings such as a tropylium ring; and heteroaromatic rings such as a pyridine ring and a pyrrole ring. The aromatic ring may include a benzene ring.

Examples of the monomer forming the repeating unit having an aromatic ring include styrene, phenyl methacrylate, and benzyl methacrylate. The repeating unit having an aromatic ring includes, for example, a repeating unit derived from styrene.

The elastomer E may further include a repeating unit derived from a conjugated diene, together with the repeating unit having an aromatic ring. Examples of the conjugated diene include butadiene and isoprene. In the elastomer E, for example, the repeating unit derived from a conjugated diene is hydrogenated. That is, in the elastomer E, the repeating unit derived from a conjugated diene does not have an unsaturated bond such as a carbon-carbon double bond. However, in the elastomer E, not all the repeating units derived from a conjugated diene may be hydrogenated. The elastomer E may include a repeating unit having an unsaturated bond.

The elastomer E may further include a modifying group. The modifying group means a functional group chemically modifying all repeating units included in the polymer chain, some repeating units included in the polymer chain, or the terminal part of the polymer chain. The modifying group can be introduced in the polymer chain by a substitution reaction, an addition reaction, or the like. The modifying group include, for example, elements having relatively high electronegativity, such as O and N. According to the modifying group including such elements, it is possible to add polarity to the elastomer E. Examples of the modifying group include a carboxylic acid group, an acid anhydride group, an acyl group, a hydroxy group, a sulfo group, a sulfanyl group, a phosphoric acid group, a phosphonic acid group, an isocyanate group, an epoxy group, a silyl group, an amino group, a nitrile group, and a nitro group. A specific example of the acid anhydride group is a maleic anhydride group.

The elastomer E is, for example, a copolymer including a repeating unit having an aromatic ring and a repeating unit derived from a conjugated diene. This copolymer may be a random copolymer or may be a block copolymer. Examples of the elastomer E of a random copolymer include a hydrogenated product of a styrene-butadiene random copolymer (hydrogenated SBR).

The elastomer E of a block copolymer may include a first block functioning as a hard segment and a second block functioning as a soft segment. In this case, the elastomer E functions as a thermoplastic elastomer. In the present disclosure, the elastomer E functioning as a thermoplastic elastomer may be called thermoplastic elastomer T. The number of the first block in the thermoplastic elastomer T may be 1 or more or 2 or more. As an example, in the thermoplastic elastomer T, a second block may be located between two first blocks. The thermoplastic elastomer T may be triblock copolymer of an ABA type. In such a case, the compositions of the two first blocks included in the thermoplastic elastomer T may be the same as or different from each other. Furthermore, the degrees of polymerization of the two first blocks may be the same as or different from each other.

In the thermoplastic elastomer T, for example, the first block includes a repeating unit having an aromatic ring. The first block may be constituted of a repeating unit having an aromatic ring. Examples of the polymer constituting the first block include polystyrene, polyphenyl methacrylate, polybenzyl methacrylate, polyphenylene, polyaryletherketone, polyarylethersulfone, and polyphenylene oxide. In the first block, the repeating unit having an aromatic ring includes, for example, a repeating unit derived from styrene. In the present disclosure, the thermoplastic elastomer including a repeating unit derived from styrene may be called a styrene thermoplastic elastomer (TPS).

In the thermoplastic elastomer T, for example, the second block includes a repeating unit derived from a conjugated diene. The second block may be constituted of a repeating unit derived from a conjugated diene. In the thermoplastic elastomer T, for example, the repeating unit derived from the conjugated diene of the second block is hydrogenated. That is, in the second block, the repeating unit derived from the conjugated diene does not have an unsaturated bond such as a carbon-carbon double bond. However, in the second block, not all the repeating units derived from the conjugated diene may be hydrogenated. The second block may include a repeating unit having an unsaturated bond. In the present disclosure, a hydrogenated product of a styrene thermoplastic elastomer having an unsaturated bond such as a carbon-carbon double bond may be called a hydrogenated styrene thermoplastic elastomer.

Examples of the thermoplastic elastomer T include a styrene-butadiene/butylene-styrene block copolymer (SBBS), a styrene-ethylene/propylene-styrene block copolymer (SEPS), a styrene-ethylene/butylene-styrene block copolymer (SEBS), a styrene-ethylene/ethylene/propylene-styrene block copolymer (SEEPS), and products obtained by introducing a modifying group into these copolymers. The elastomer E may include at least one selected from the group consisting of SEBS and SEEPS as the thermoplastic elastomer T. The SBBS is a copolymer obtained by hydrogenating the 1,2-vinyl bond ($-CH_2CH(CH=CH_2)-$) included in a styrene-butadiene-styrene block copolymer (SBS).

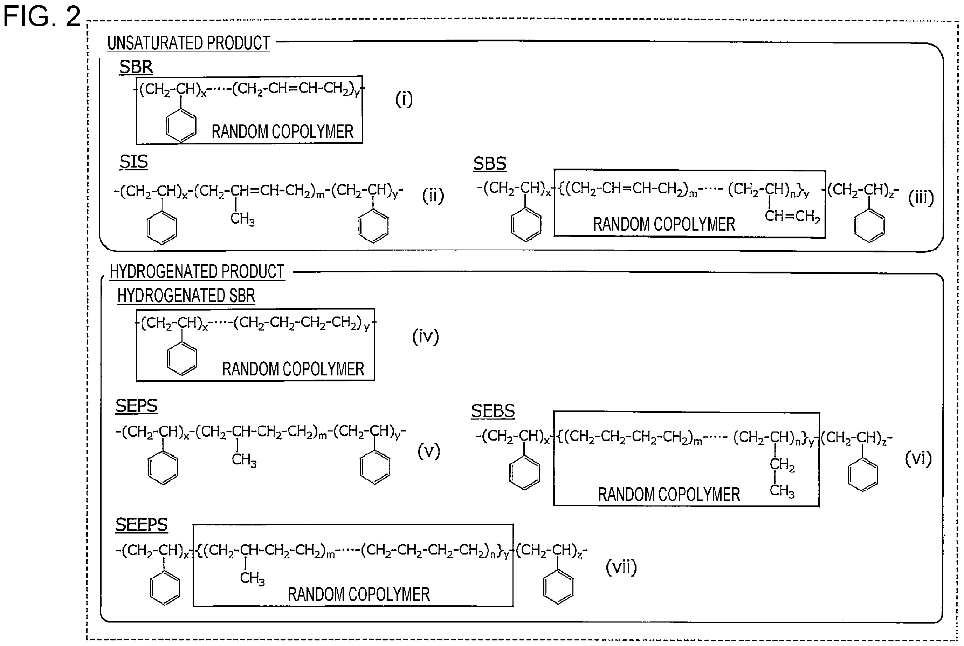

Fig. 2 is a diagram showing examples of the elastomer. Fig. 2 shows specific examples of elastomer (unsaturated product) before hydrogenation and elastomer (hydrogenated product) after hydrogenation. The hydrogenated products of Fig. 2 are specific examples of the elastomer E included in the binder 12. As shown in Fig. 2, examples of the unsaturated product include a styrene-butadiene random copolymer (SBR) represented by a formula (i), a styrene-isoprene-styrene block copolymer (SIS) represented by a formula (ii), and a styrene-butadiene-styrene block copolymer (SBS) represented by a formula (iii). As obvious from Fig. 2, the hydrogenated SBR represented by a formula (iv) is a hydrogenated product of SBR. The SEPS represented by a formula (v) is a hydrogenated product of SIS. The SEBS represented by a formula (vi) is a hydrogenated product of SBS. The SEEPS represented by a formula (vii) is a hydrogenated product of a styrene-isoprene/butadiene-styrene block copolymer.

In the binder 12, the hydrogenation rate of the elastomer E is, for example, 30% or more and may be 50% or more, 70% or more, 90% or more, 95% or more, and 99% or more. There is a tendency that the higher the hydrogenation rate of the elastomer E, the more the dispersibility of the conductive fiber 11 can be improved by the binder 12. The hydrogenation rate of the elastomer E means the ratio of the number of the bonds changed from a carbon-carbon double bond to a single bond by hydrogenation to the number of the carbon-carbon double bond included in the elastomer before the hydrogenation.

As described above, the content rate of the repeating unit having an aromatic ring in the elastomer E is 15 mass% or more. This content rate may be 16 mass% or more, 20 mass% or more, 30 mass% or more, or 40 mass% or more. There is a tendency that the higher the content rate of the repeating unit having an aromatic ring, the more the dispersibility of the conductive fiber 11 can be improved by the binder 12. The upper limit of the content rate of the repeating unit having an aromatic ring is not particularly limited and is, for example, 70 mass% and may be 67 mass% or 60 mass%. In the present disclosure, when the repeating unit having an aromatic ring is a repeating unit derived from styrene, the content rate of the repeating unit derived from styrene in the elastomer E may be referred to as a styrene rate. The content rate of the repeating unit having an aromatic ring in the elastomer E can be determined by proton nuclear magnetic resonance ($^1$H NMR) measurement.

The weight average molecular weight (Mw) of the elastomer E is not particularly limited and is, for example, 1,000,000 or less and may be 500,000 or less, 400,000 or less, 300,000 or less, 200,000 or less, or 100,000 or less. The lower limit of the weight average molecular weight of the elastomer E is not particularly limited and is, for example, 1,000. The weight average molecular weight of the elastomer E can be specified by gel permeation chromatography (GPC) measurement using polystyrene as a standard sample. In other words, the weight average molecular weight is a value converted by polystyrene. In the GPC measurement, chloroform may be used as an eluent. When two or more peak tops are observed in a GPC chart, a weight average molecular weight calculated from the whole peak range including each peak top can be recognized as the weight average molecular weight of the elastomer E.

The binder 12 may include the elastomer E as a main component. The binder 12, for example, essentially consists of the elastomer E.

The electrode material 100 may include a non-polar solvent as the solvent 14 from the viewpoint of suppressing the reaction with the solid electrolyte 13. The elastomer E tends to be highly soluble in a non-polar solvent and is easily dissolved in the electrode material 100 including a non-polar solvent. When the elastomer E is dissolved in the electrode material 100, the binder 12 tends to be more adsorbed to the conductive fiber 11.

The binder 12 may further include additional polymer other than the elastomer E. Examples of the additional polymer that can function as a binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylene sulfide, hexafluoropolypropylene, styrene-butadiene rubber, carboxymethylcellulose, and ethylcellulose. As the additional polymer, copolymers synthesized using two or more monomers selected from the group consisting of tetrafluoroethylene, hexafluoroethylene, hexafluoropropylene, perfluoroalkyl vinyl ethe, fluorinated vinylidene, chlorotrifluoroethylene, ethylene, propylene, butadiene, styrene, pentafluoropropylene, fluoromethyl vinyl ether, acrylic ester, acrylic acid, and hexadiene can also be used. These binders may be used alone or in combination of two or more thereof.

The binder 12 may further include an additional elastomer other than the elastomer E, as another polymer. Examples of the additional elastomer that can be included in the binder 12 include butylene rubber (BR), isoprene rubber (IR), chloroprene rubber (CR), acrylonitrile-butadiene rubber (NBR), styrene-butylene rubber (SBR), a styrene-butadiene-styrene block copolymer (SBS), a styrene-isoprene-styrene block copolymer (SIS), hydrogenated isoprene rubber (HIR), hydrogenated butyl rubber (HIIR), and hydrogenated nitrile rubber (HNBR). As the elastomer, a mixture of two or more selected from these polymers may be used.

[Solid electrolyte]

In the embodiment 1, the solid electrolyte 13 has, for example, lithium-ion conductivity. As the solid electrolyte 13, a sulfide solid electrolyte, an oxide solid electrolyte, a halide solid electrolyte, a polymer solid electrolyte, a complex hydride solid electrolyte, or the like can be used. The solid electrolyte 13 may include a halide solid electrolyte.

In the present disclosure, the term "oxide solid electrolyte" means a solid electrolyte including oxygen. The oxide solid electrolyte may further include an anion other than sulfur and halogen elements as anion other than oxygen.

In the present disclosure, the term "halide solid electrolyte" means a solid electrolyte including a halogen element and not including sulfur. In the present disclosure, the solid electrolyte not containing sulfur means a solid electrolyte represented by a formula not containing a sulfur element. Accordingly, a solid electrolyte containing a very small amount of sulfur, for example, 0.1 mass% or less of sulfur, is encompassed in a solid electrolyte not containing sulfur. The halide solid electrolyte may further oxygen as an anion other than halogen elements.

As the sulfide solid electrolyte, for example, $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, or $Li_{10}GeP_2S_{12}$ can be used. To these sulfide solid electrolytes, LiX, $Li_2O$, $MO_q$, $Li_pMO_q$, or the like may be added. The element X in "LiX" is at least one selected from the group consisting of F, Cl, Br, and I. The element M in "$MO_q$" and "$Li_pMO_q$" is at least one selected from the group consisting of P, Si, Ge, B, Al, Ga, In, Fe, and Zn. The p and q in "$MO_q$" and "$Li_pMO_q$" are each independently a natural number.

As the oxide solid electrolyte, for example, an NASICON-type solid electrolyte represented by $LiTi_2(PO_4)_3$ or its element substitute, a perovskite-type solid electrolyte represented by $(LaLi)TiO_3$, an LISICON-type solid electrolyte represented by $Li_{14}ZnGe_4O_{16}$, $Li_4SiO_4$, $LiGeO_4$, or its element substitute, a garnet-type solid electrolyte represented by $Li_7La_3Zr_2O_{12}$ or its element substitute, $Li_3PO_4$ or its N-substitute, or glass or glass ceramic based on an Li-B-O compound such as $LiBO_2$ or $Li_3BO_3$ and doped with $Li_2SO_4$, $Li_2CO_3$, or the like can be used.

The halide solid electrolyte includes, for example, Li, M, and X. The M is at least one selected from the group consisting of metal elements and metalloid elements excluding Li. The X is at least one selected from the group consisting of F, Cl, Br, and I. The halide solid electrolyte has high thermal stability and can therefore improve the stability of the battery. Furthermore, the halide solid electrolyte does not include sulfur and therefore can suppress the generation of hydrogen sulfide gas.

In the present disclosure, the "metalloid elements" are B, Si, Ge, As, Sb, and Te.

In the present disclosure, the "metal elements" are all elements in Groups 1 to 12 of the Periodic Table excluding hydrogen and all elements in Groups 13 to 16 excluding B, Si, Ge, As, Sb, Te, C, N, P, O, S, and Se.

That is, in the present disclosure, the "metalloid elements" and "metal elements" are element groups that can become cations when they form inorganic compounds with halogen elements.

For example, the halide solid electrolyte may be a material represented by the following formula (1):

$$Li_\alpha M_\beta X_\gamma \qquad \text{formula (1)}.$$

In the formula (1), $\alpha$, $\beta$, and $\gamma$ are each independently a value higher than 0, and $\gamma$ can be, for example, 4 or 6.

According to the above configuration, the ion conductivity of the halide solid electrolyte is improved, and thereby the ion conductivity of the electrode formed from the electrode material 100 in the embodiment 1 can be improved. When this electrode is used in a battery, the cycle characteristics of the battery can be more improved.

In the formula (1), the element M may include Y (yttrium). That is, the halide solid electrolyte may include Y as a metal element.

The halide solid electrolyte including Y may be represented by, for example, the following formula (2):

$$Li_a Me_b Y_c X_6 \qquad \text{formula (2)}.$$

In the formula (2), a, b, and c may satisfy a + mb + 3c = 6 and c > 0. The element Me is at least one selected from the group consisting of metal elements and metalloid elements excluding Li and Y, and m represents the valence of the element Me. When the element Me includes multiple types of elements, mb is the total value of the products of the composition ratio of each element and the valence of the element. For example, when Me includes element Me1 and element Me2, the composition ratio of the element Me1 is bi, the valence of the element Me1 is $m_1$, the composition ratio of the element Me2 is $b_2$, and the valence of the element Me2 is $m_2$, mb is represented by $m_1b_1 + m_2b_2$. In the formula (2), the element X is at least one selected from the group consisting of F, Cl, Br, and I.

The element Me may be, for example, at least one selected from the group consisting of Mg, Ca, Sr, Ba, Zn, Sc, Al, Ga, Bi, Zr, Hf, Ti, Sn, Ta, Gd, and Nb.

As the halide solid electrolyte, for example, the following materials can be used. According to the following materials, the ion conductivity of the solid electrolyte 13 is more improved, and thereby the ion conductivity of the electrode formed from the electrode material 100 in the embodiment 1 is more improved. According to this electrode, the cycle characteristics of a battery can be more improved.

The halide solid electrolyte may also be a material represented by the following formula (A1):

$$Li_{6-3d}Y_dX_6 \qquad \text{formula (A1).}$$

In the formula (A1), the element X is at least one selected from the group consisting of Cl, Br, and I. In the formula (A1), d satisfies $0 < d < 2$.

The halide solid electrolyte may also be a material represented by the following formula (A2):

$$Li_3YX_6 \qquad \text{formula (A2).}$$

In the formula (A2), the element X is at least one selected from the group consisting of Cl, Br, and I.

The halide solid electrolyte may also be a material represented by the following formula (A3):

$$Li_{3-3\delta}Y_{1+\delta}Cl_6 \qquad \text{formula (A3).}$$

In the formula (A3), $\delta$ satisfies $0 < \delta \leq 0.15$.

The halide solid electrolyte may also be a material represented by the following formula (A4):

$$Li_{3-3\delta}Y_{1+\delta}Br_6 \qquad \text{formula (A4).}$$

In the formula (A4), $\delta$ satisfies $0 < \delta \leq 0.25$.

The halide solid electrolyte may also be a material represented by the following formula (A5):

$$Li_{3-3\delta+a}Y_{1+\delta-a}Me_aCl_{6-x-y}Br_xI_y \qquad \text{formula (A5).}$$

In the formula (A5), the element Me is at least one selected from the group consisting of Mg, Ca, Sr, Ba, and Zn.

Furthermore, in the formula (A5), the followings are satisfied:

$$-1 < \delta < 2;$$

$$0 < a < 3;$$

$$0 < (3 - 3\delta + a);$$

$$0 < (1 + \delta - a);$$

$$0 \leq x \leq 6;$$

$$0 \leq y \leq 6;$$

and

$$(x + y) \leq 6.$$

The halide solid electrolyte may also be a material represented by the following formula (A6):

$$Li_{3-3\delta}Y_{1+\delta-a}Me_aCl_{6-x-y}Br_xI_y \qquad \text{formula (A6)}.$$

In the formula (A6), the element Me is at least one selected from the group consisting of Al, Sc, Ga, and Bi.
Furthermore, in the formula (A6), the followings are satisfied:

$$-1 < \delta < 1;$$

$$0 < a < 2;$$

$$0 < (1 + \delta - a);$$

$$0 \leq x \leq 6;$$

$$0 \leq y \leq 6;$$

and

$$(x + y) \leq 6.$$

The halide solid electrolyte may also be a material represented by the following formula (A7):

$$Li_{3-3\delta}Y_{1+\delta-a}Me_aCl_{6-x-y}Br_xI_y \qquad \text{formula (A7)}.$$

In the formula (A7), the element Me is at least one selected from the group consisting of Zr, Hf, and Ti.
Furthermore, in the formula (A7), the followings are satisfied:

$$-1 < \delta < 1;$$

$$0 < a < 1.5;$$

$$0 < (3 - 3\delta - a);$$

$$0 < (1 + \delta - a);$$

$$0 \leq x \leq 6;$$

$$0 \leq y \leq 6;$$

and

$$(x + y) \leq 6.$$

The halide solid electrolyte may also be a material represented by the following formula (A8):

$$Li_{3-3\delta}Y_{1+\delta-a}Me_aCl_{6-x-y}Br_xI_y \qquad \text{formula (A8)}.$$

In the formula (A8), the element Me is at least one selected from the group consisting of Ta and Nb.

Furthermore, in the formula (A8), the followings are satisfied:

$$-1 < \delta < 1;$$

$$0 < a < 1.2;$$

$$0 < (3 - 3\delta - 2a);$$

$$0 < (1 + \delta - a);$$

$$0 \leq x \leq 6;$$

$$0 \leq y \leq 6;$$

and

$$x + y \leq 6.$$

As the halide solid electrolyte, more specifically, for example, $Li_3YX_6$, $Li_{2.7}YX_6$, $Li_2MgX_4$, $Li_2FeX_4$, $Li(Al,Ga,In)X_4$, $Li_3(Al,Ga,In)X_6$, $Li_3(Ti,Al)X_6$, and $Li_{2.7}(Ti,Al)X_6$ can be used. In these materials, the element X is at least one selected from the group consisting of F, Cl, Br, and I. In the present disclosure, when the elements in a formula are denoted as "(Al,Ga,In)", this notation indicates at least one element selected from the parenthesized group of elements. That is, "(Al,Ga,In)" is synonymous with "at least one selected from the group consisting of Al, Ga, and In". The same is applied to other elements

As the polymer solid electrolyte, for example, a compound of a polymer compound and a lithium salt can be used. The polymer compound may have an ethylene oxide structure. A polymer compound having an ethylene oxide structure can contain a large amount of a lithium salt. Accordingly, it is possible to more improve the ion conductivity. As the lithium salt, for example, $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$ can be used. The lithium salts may be used alone or in combination of two or more thereof.

As the complex hydride solid electrolyte, for example, $LiBH_4$-$LiI$ and $LiBH_4$-$P_2S_5$ can be used.

When the shape of the solid electrolyte 13 is particulate (e.g., spherical), the median diameter of the solid electrolyte 13 may be 1 μm or more and 100 μm or less or may be 1 μm or more and 10 μm or less. When the median diameter of the solid electrolyte 13 is 1 μm or more and 100 μm or less, the solid electrolyte 13 can be easily dispersed in the solvent 14.

When the shape of the solid electrolyte 13 is particulate (e.g., spherical), the median diameter of the solid electrolyte 13 may be 0.1 μm or more and 1 μm or less. When the median diameter of the solid electrolyte 13 is 0.1 μm or more and 1 μm or less, the electrode produced from the electrode material 100 has higher surface smoothness and can have a denser structure.

In the electrode material 100, the solid electrolyte 13 may have a median diameter smaller than that of the active material 10. Consequently, the solid electrolyte 13 and the active material 10 can be well dispersed.

[Solvent]

The solvent 14 may be an organic solvent. The organic solvent is a compound containing carbon and is, for example, a compound containing elements such as carbon, hydrogen, nitrogen, oxygen, sulfur, and a halogen. The solvent 14 is, for example, a non-polar solvent. The solvent 14 can dissolve, for example, the binder 12. When the binder 12 is dissolved in the solvent 14, there is a tendency that the conductive fiber 11 can be easily dispersed by the binder 12. However, the binder 12 need not be dissolved in the solvent 14.

The solvent 14 may include at least one selected from the group consisting of hydrocarbon, a compound having a halogen group, and a compound having an ether bond.

The hydrocarbon is a compound consisting of carbon and hydrogen only. The hydrocarbon may be an aliphatic hydrocarbon. The hydrocarbon may be a saturated hydrocarbon or may be an unsaturated hydrocarbon. The hydrocarbon may be linear or branched. The number of carbon atoms included in the hydrocarbon is not particularly limited and may be 7 or more. An electrode material 100 having excellent dispersibility of the solid electrolyte 13 can be obtained by using the hydrocarbon. Furthermore, it is possible to suppress a reduction in the ion conductivity of the solid electrolyte 13 due to mixing with the solvent 14.

The hydrocarbon may have a ring structure. The ring structure may be an alicyclic hydrocarbon or an aromatic hydrocarbon. The ring structure may be monocyclic or polycyclic. When the hydrocarbon has a ring structure, the solid electrolyte 13 can be easily dispersed in the solvent 14. From the viewpoint of enhancing the dispersibility of the solid electrolyte 13 in the electrode material 100, the hydrocarbon may include an aromatic hydrocarbon. That is, the solvent 14 may include an aromatic hydrocarbon. The hydrocarbon may be an aromatic hydrocarbon.

The compound having a halogen group may be constituted of carbon and hydrogen only in the part other than the halogen group. That is, the compound having a halogen group means a compound in which at least one hydrogen atom included in a hydrocarbon is substituted by a halogen group. Examples of the halogen group include F, Cl, Br, and I. As the halogen group, at least one selected from the group consisting of F, Cl, Br, and I may be used. The compound having a halogen group can have high polarity. Since the solid electrolyte 13 can be easily dispersed in the solvent 14 by using the compound having a halogen group as the solvent 14, it is possible to obtain the electrode material 100 with excellent dispersibility. As a result, the electrode manufactured from the electrode material 100 has excellent ion conductivity and can have a denser structure.

The number of carbon atoms included in the compound having a halogen group is not particularly limited and may be 7 or more. Consequently, since the compound having a halogen group is difficult to volatilize, the electrode material 100 can be stably manufactured. The compound having a halogen group can have a large molecular weight. That is, the compound having a halogen group can have a high boiling point.

The compound having a halogen group may have a ring structure. The ring structure may be an alicyclic hydrocarbon or an aromatic hydrocarbon. The ring structure may be monocyclic or polycyclic. When the compound having a halogen group has a ring structure, the solid electrolyte 13 can be easily dispersed in the solvent 14. From the viewpoint of enhancing the dispersibility of the solid electrolyte 13 in the electrode material 100, the compound having a halogen group may include an aromatic hydrocarbon. The compound having a halogen group may be an aromatic hydrocarbon.

The compound having a halogen group may have a halogen group only as a functional group. In this case, the number of the halogen atoms included in the compound having a halogen group is not particularly limited. As the halogen group, at least one selected from the group consisting of F, Cl, Br, and I may be used. Since the solid electrolyte 13 can be easily dissolved in the solvent 14 by using such a compound as the solvent 14, the electrode material 100 with excellent dispersibility can be obtained. As a result, the electrode manufactured from the electrode material 100 has excellent ion conductivity and can have a denser structure. The electrode manufactured from the electrode material 100 can easily have a dense structure with few pinholes, unevenness, and so on by using such a compound as the solvent 14.

The compound having a halogen group may be a halogenated hydrocarbon. The halogenated hydrocarbon means a compound in which all hydrogen atoms included in the hydrocarbon are substituted by halogen groups. Since the solid electrolyte 13 can be easily dispersed in the solvent 14 by using the halogenated hydrocarbon as the solvent 14, an electrode material 100 with excellent dispersibility can be obtained. As a result, the electrode manufactured from the electrode material 100 has excellent ion conductivity and can have a denser structure. The electrode manufactured from the electrode material 100 can easily have a dense structure with few pinholes, unevenness, and so on by using such a compound as the solvent 14.

The compound having an ether bond may be constituted of carbon and hydrogen only in the part other than the ether bond. That is, the compound having an ether bond means a compound in which at least one C-C bond included in the hydrocarbon is substituted by a C-O-C bond. The compound having an ether bond can have high polarity. The solid electrolyte 13 can be easily dispersed in the solvent 14 by using the compound having an ether bond as the solvent 14. Accordingly, an electrode material 100 having excellent dispersibility can be obtained. As a result, the electrode manufactured from the electrode material 100 has excellent ion conductivity and can have a denser structure.

The compound having an ether bond may have a ring structure. The ring structure may be an alicyclic hydrocarbon or an aromatic hydrocarbon. The ring structure may be monocyclic or polycyclic. When the compound having an ether bond has a ring structure, the solid electrolyte 13 can be easily dispersed in the solvent 14. From the viewpoint of enhancing the dispersibility of the solid electrolyte 13 in the electrode material 100, the compound having an ether bond may include an aromatic hydrocarbon. The compound having an ether bond may be an aromatic hydrocarbon.

Examples of the solvent 14 include toluene, ethylbenzene, mesitylene, pseudocumene, p-xylene, cumene, tetralin, m-xylene, dibutyl ether, 1,2,4-trichlorobenzene, chlorobenzene, 2,4-dichlorotoluene, anisole, o-chlorotoluene, m-dichlorobenzene, p-chlorotoluene, o-dichlorobenzene, 1,4-dichlorobutane, and 3,4-dichlorotoluene. These solvents may be used alone or in combination of two or more thereof.

The solvent 14 may have a boiling point of 100°C or more and 250°C or less. The solvent 14 may be a liquid at normal temperature (25°C). Since such a solvent is difficult to volatilize at normal temperature, the electrode material 100 can be stably manufactured. Accordingly, an electrode material 100 that can be easily applied to a surface of a current collector or base material is obtained. The solvent 14 included in the electrode material 100 can be easily removed when an electrode is produced.

The amount of water in the solvent 14 may be 10 mass ppm or less. A reduction in the ion conductivity due to reaction of the solid electrolyte 13 can be suppressed by decreasing the amount of water. Examples of the method for decreasing the amount of water include a dehydration method using a molecular sieve and a dehydration method by bubbling using inert gas such as nitrogen gas and argon gas. From the viewpoint of being capable of deoxidizing at the same time as dehydration, the dehydration method by bubbling using inert gas is recommended. The amount of water can be measured with a Karl Fischer water measurement apparatus.

The solvent 14 can be a liquid that can disperse the solid electrolyte 13. The solid electrolyte 13 need not be dissolved in the solvent 14. When the solid electrolyte 13 is not dissolved in the solvent 14, an electrode material 100 maintaining an ion conductive phase formed during manufacturing the solid electrolyte 13 can be produced. Accordingly, in the electrode manufactured from this electrode material 100, a reduction in ion conductivity can be suppressed.

The solvent 14 may dissolve partially or wholly the solid electrolyte 13. The denseness of the electrode manufactured from this electrode material 100 can be improved by dissolving the solid electrolyte 13.

[Other material]

The electrode material 100 may further include additional material in addition to the above-described materials. Examples of the additional material include a conductive assistant other than the conductive fiber 11. Examples of the conductive assistant include graphite such as natural graphite and artificial graphite, carbon black such as acetylene black and Ketjen black, metal fibers, conductive powders such as fluorinated carbon and aluminum, conductive whiskers such as zinc oxide and potassium titanate, conductive metal oxides such as titanium oxide, and conductive polymers such as polyaniline, polypyrrole, and polythiophene.

[Electrode material]

The electrode material 100 may be in a form of paste or in a form of a dispersion. In the electrode material 100, the above-described materials are mixed together. The solid content concentration of the electrode material 100 is not particularly limited and may be 20 mass% or more and 70 mass% or less or 30 mass% or more and 60 mass% or less.

[Method for manufacturing electrode material]

A method for manufacturing the electrode material 100 will now be described. The method for manufacturing the electrode material 100 of the present embodiment includes producing a slurry containing a conductive fiber 11 and a binder 12. The method for manufacturing the electrode material 100 may further include mixing the slurry containing a conductive fiber 11 and a binder 12 with a slurry containing at least one selected from the group consisting of an active material 10 and a solid electrolyte 13. In the present disclosure, the slurry containing a conductive fiber 11 and a binder 12 may be called a first slurry, and the slurry containing at least one selected from the group consisting of an active material 10 and a solid electrolyte 13 may be called a second slurry.

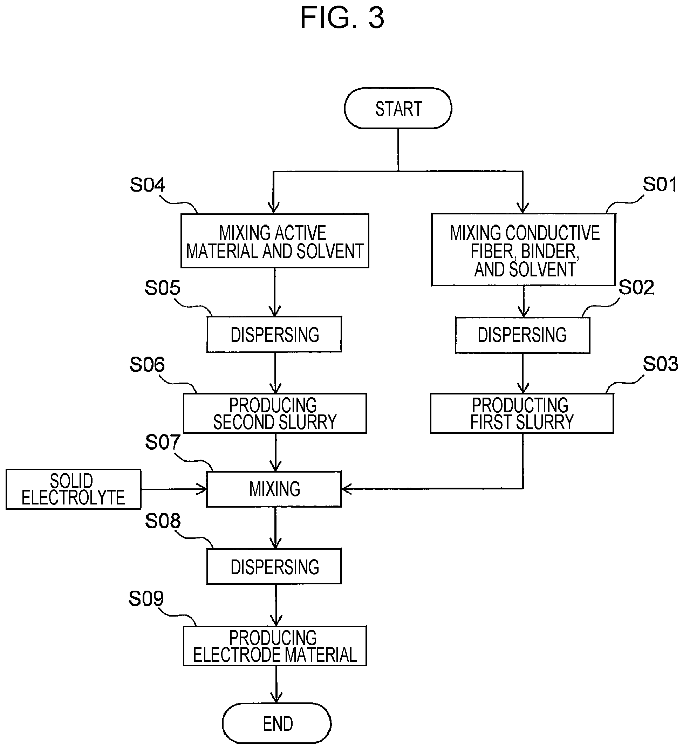

Fig. 3 is a flow chart showing an example of a method for manufacturing the electrode material 100. As shown in Fig. 3, in the method for manufacturing the electrode material 100, first, in step S01, a conductive fiber 11, a binder 12, and a solvent 14 are mixed. As an example, these materials may be mixed by adding the conductive fiber 11 to a solution obtained by dissolving the binder 12 in the solvent 14. In step S01, in addition to these materials, another dispersant may be further mixed or not mixed. According to the combination of the binder 12 and the dispersant, the amount of the dispersant can be decreased than before. The dispersion stability of the conductive fiber 11 may be improved by the dispersant. The dispersant may have a function of dispersing an active material 10 or a solid electrolyte 13 that are mixed in a step described later. Subsequently, in step S02, the obtained mixture is subjected to dispersion treatment. The method of the dispersion treatment is not particularly limited. In the dispersion treatment, for example, a dispersing device such as a stirring type, shaking type, ultrasonic type, or rotary type device may be used, or a dispersing and kneading device such as a high-speed homogenizer, ultrasonic homogenizer, ball mill, bead mill, planetary mixer, sand mill, roll mill, or kneader may be used. In the dispersion treatment, these devices may be used alone or in combination of two or more thereof. A first slurry can be produced by the dispersion treatment in step S02 (step S03).

Subsequently, in step S04, the active material 10 and the solvent 14 are mixed. In step S04, in addition to these materials, a binder 12, another dispersant, and so on may be further mixed. Subsequently, in step S05, the obtained mixture is subjected to dispersion treatment. The dispersion treatment can use the device mentioned in step S02. According to the dispersion treatment in step S05, a second slurry can be obtained (step S06).

Subsequently, in step S07, the first slurry, the second slurry, and the solid electrolyte 13 are mixed. Subsequently, in step S08, the mixture obtained in step S07 is subjected to dispersion treatment. The dispersion treatment can use the device mentioned in step S02. According to the dispersion treatment in step S08, an electrode material 100 can be obtained (step S09).

In the flow chart of Fig. 3, in step S04, the solid electrolyte 13 may be used instead of the active material 10. In this case, in step S07, the active material 10, instead of the solid electrolyte 13, is mixed with the first slurry and the second slurry.

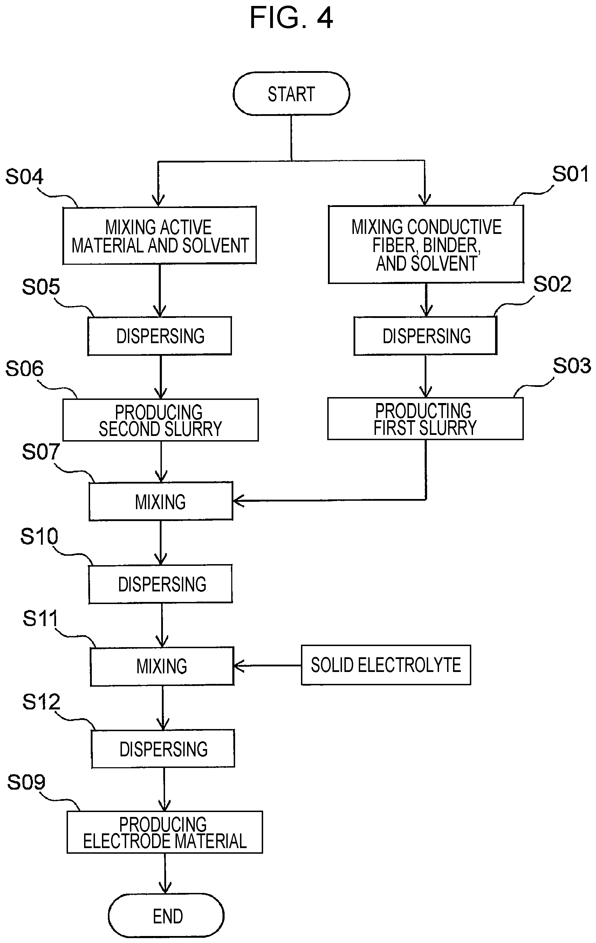

Fig. 4 is a flow chart showing another example of the method for manufacturing the electrode material 100. In the manufacturing method shown in Fig. 4, in step S07, the first slurry and the second slurry are mixed. The obtained mixture is subjected to dispersion treatment (step S10). Subsequently, in step S11, the mixture subjected to dispersion treatment is mixed with the solid electrolyte 13. In step S12, the obtained mixture is subjected to dispersion treatment. According to the dispersion treatment of step S12, an electrode material 100 can be obtained (step S09). Except for the above, the manufacturing method shown in Fig. 4 is the same as the manufacturing method shown in Fig. 3. Accordingly, the steps common to the manufacturing method shown in Fig. 4 and the manufacturing method shown in Fig. 3 are given the same reference numerals, and their explanation may be omitted. That is, the explanation relating to each of the manufacturing methods below can be applied to each other as long as there is no technical inconsistency. Furthermore, the manufacturing methods may be combined with each other as long as there is no technical inconsistency.

In steps S10 and S12, the dispersion treatment can use the device mentioned in step S02. In the flow chart of Fig. 4, in step S04, the solid electrolyte 13 may be used instead of the active material 10. In this case, in step S11, the active material 10 is used instead of the solid electrolyte 13.

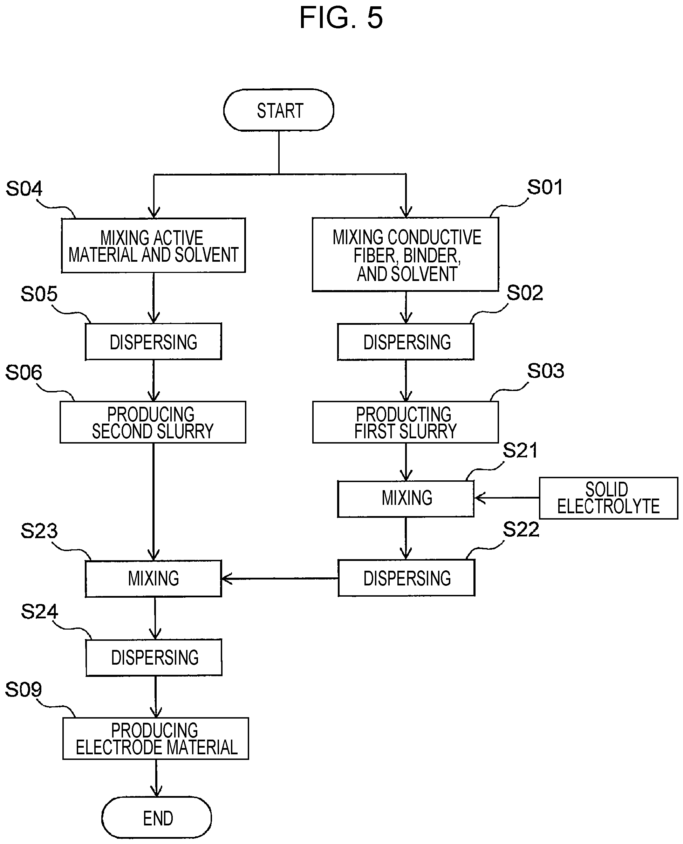

Fig. 5 is a flow chart showing another example of the method for manufacturing the electrode material 100. In the manufacturing method shown in Fig. 5, after step S03, the first slurry and the solid electrolyte 13 are mixed (step S21). In step S22, the obtained mixture is subjected to dispersion treatment. Subsequently, in step S23, the mixture subjected to dispersion treatment is mixed with the second slurry. In step S24, the obtained mixture is subjected to dispersion treatment. According to the dispersion treatment in step S24, an electrode material 100 can be obtained (step S09). Except for the above, the manufacturing method shown in Fig. 5 is the same as the manufacturing method shown in Fig. 3. In steps S22 and S24, the dispersion treatment can use the device mentioned in step S02. In the manufacturing method shown in Fig. 5, the mixture subjected to dispersion treatment in step S22 can also be recognized as a first slurry containing the conductive fiber 11 and the binder 12. In the flow chart of Fig. 5, in step S04, the solid electrolyte 13 may be used instead of the active material 10. In this case, in step S21, the active material 10 is mixed with the first slurry instead of the solid electrolyte 13.

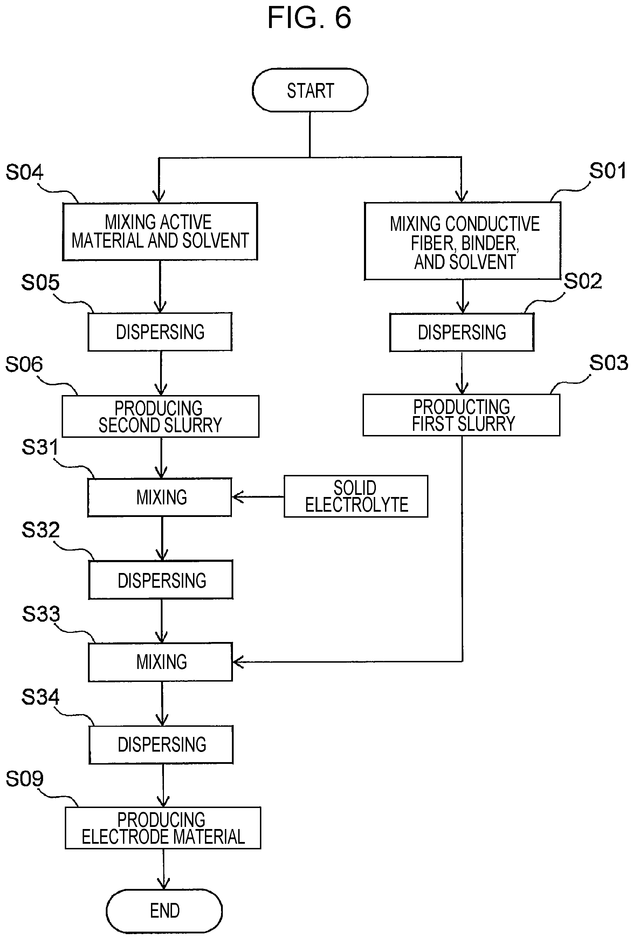

Fig. 6 is a flow chart showing another example of the method for manufacturing the electrode material 100. In the manufacturing method shown in Fig. 6, after step S06, the second slurry and the solid electrolyte 13 are mixed (step S31). In step S32, the obtained mixture is subjected to dispersion treatment. Subsequently, in step S33, the mixture subjected to dispersion treatment is mixed with the first slurry. In step S34, the obtained mixture is subjected to dispersion treatment. According to the dispersion treatment of step S34, an electrode material 100 can be obtained (step S09). Except for the above, the manufacturing method shown in Fig. 6 is the same as the manufacturing method shown in Fig. 3. In steps S32 and S34, in the dispersion treatment, the device mentioned in step S02 can be used. In the manufacturing method shown in Fig. 6, the mixture subjected to dispersion treatment in step S32 can also be recognized as a second slurry. In the flow chart of Fig. 6, in step S04, the solid electrolyte 13 may be used instead of the active material 10. In this case, in step S31, the active material 10 is mixed with the second slurry instead of the solid electrolyte 13.

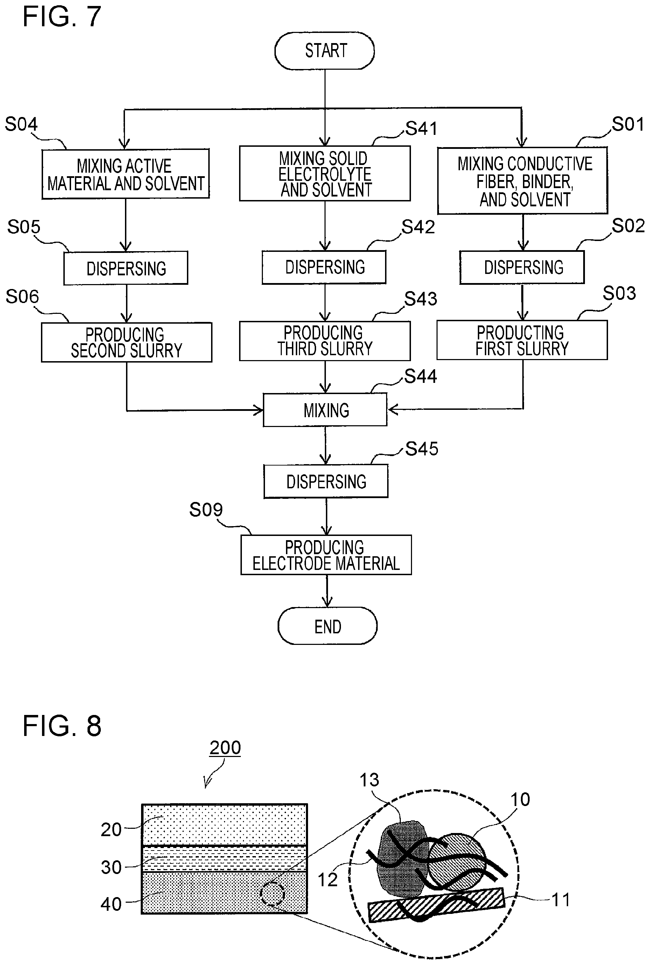

Fig. 7 is a flow chart showing another example of the method for manufacturing the electrode material 100. In the manufacturing method shown in Fig. 7, in step S41, the solid electrolyte 13 and the solvent 14 are mixed. In step S41, in addition to these materials, a binder 12, a dispersant, and so on may be further mixed. Subsequently, in step S42, the obtained mixture is subjected to dispersion treatment. According to the dispersion treatment of step S42, a third slurry can be obtained (step S43). Subsequently, in step S44, the first slurry, the second slurry, and the third slurry are mixed. In step S45, the obtained mixture is subjected to dispersion treatment. According to the dispersion treatment of step S45, an electrode material 100 can be obtained (step S09). Except for the above, the manufacturing method shown in Fig. 7 is the same as the manufacturing method shown in Fig. 3. In steps S42 and S45, in the dispersion treatment, the device mentioned in step S02 can be used.

In all the manufacturing methods shown in Figs. 3 to 7, the first slurry containing the conductive fiber 11 and the binder 12 and the second slurry containing at least one selected from the group consisting of the active material 10 and the solid electrolyte 13 are mixed. In the electrode material 100 produced by such a manufacturing method, the dispersibility of the conductive fiber 11 tends to be improved.

(Embodiment 2)

An embodiment 2 will now be described. Explanation that overlaps with the above-described embodiment 1 is omitted as appropriate.

Fig. 8 shows a cross-sectional view of a battery 200 according to the embodiment 2.

The battery 200 in the embodiment 2 includes a positive electrode 20, a negative electrode 40, and an electrolyte layer 30.

At least one selected from the group consisting of the positive electrode 20 and the negative electrode 40 is formed from the electrode material 100 in the embodiment 1 above. That is, at least one selected from the group consisting of the positive electrode 20 and the negative electrode 40 includes the active material 10, the conductive fiber 11, and the binder 12 described in the embodiment 1. At least one selected from the group consisting of the positive electrode 20 and the negative electrode 40 may further include a solid electrolyte 13 described in the embodiment 1.

The electrolyte layer 30 is located between the positive electrode 20 and the negative electrode 40.

According to the configuration above, in the battery 200 of the embodiment 2, not only the energy density is high, but also the cycle characteristics tend to be excellent.

As shown in Fig. 8, in the battery 200 in the embodiment 2, the negative electrode 40 may be formed from the electrode material 100 in the embodiment 1 above. That is, the negative electrode 40 may include the active material 10, the conductive fiber 11, and the binder 12 described in the embodiment 1. Hereinafter, a battery 200 including a negative electrode 40 formed from the electrode material 100 will be described.

The electrolyte layer 30 is a layer including an electrolyte material. Examples of the electrolyte material include a solid electrolyte. That is, the electrolyte layer 30 may be a solid electrolyte layer including a solid electrolyte. As the solid electrolyte included in the electrolyte layer 30, the solid electrolytes exemplified as the solid electrolyte 13 of the embodiment 1 may be used. For example, a sulfide solid electrolyte, an oxide solid electrolyte, a halide solid electrolyte, a polymer solid electrolyte, or a complex hydride solid electrolyte can be used. The solid electrolyte may be a halide solid electrolyte. A halide solid electrolyte has high thermal stability and therefore can improve the stability of the battery 200.

The electrolyte layer 30 may include a solid electrolyte as a main component. The electrolyte layer 30 may include the solid electrolyte at a mass proportion of 70% or more (70 mass% or more) with respect to the total amount of the electrolyte layer 30.

According to the configuration above, the charge and discharge characteristics of the battery 200 can be improved.

The electrolyte layer 30 includes a solid electrolyte as the main component and may further include inevitable impurities or the starting materials used when the solid electrolyte is synthesized, by-products, decomposition products, and so on.

The electrolyte layer 30 may include, except for inevitable impurities, the solid electrolyte at a mass proportion of 100% (100 mass%) with respect to the total amount of the electrolyte layer 30.

According to the configuration above, the charge and discharge characteristics of the battery 200 can be more improved.

The electrolyte layer 30 may include two or more of the materials mentioned as the solid electrolyte. For example, the electrolyte layer 30 may include a halide solid electrolyte and a sulfide solid electrolyte.

The electrolyte layer 30 may have a thickness of 1 $\mu$m or more and 300 $\mu$m or less. When the thickness of the electrolyte layer 30 is 1 $\mu$m or more, the risk of short circuit between the positive electrode 20 and the negative electrode 40 is reduced. When the thickness of the electrolyte layer 30 is 300 $\mu$m or less, the battery 200 can easily operate at high output. That is, the battery 200 can sufficiently secure the safety and also can operate at high output by appropriately adjusting the thickness of the electrolyte layer 30.

The shape of the solid electrolyte included in the battery 200 is not particularly limited. The shape of the solid electrolyte may be acicular, spherical, oval spherical, or the like. The shape of the solid electrolyte may be particulate.

The positive electrode 20 may include an electrolyte material, for example, a solid electrolyte. As the solid electrolyte, the solid materials exemplified as the material constituting the electrolyte layer 30 can be used. According to the configuration above, the ion conductivity (e.g., lithium-ion conductivity) inside the positive electrode 20 is improved, and the battery 200 can operate at high output.

In the positive electrode 20, a sulfide solid electrolyte is used as the solid electrolyte, and the above-described halide solid electrolyte may be used as a covering material that covers the active material.

The positive electrode 20 includes, for example, a material that has a property of occluding and releasing metal ions (for example, lithium ions) as the positive electrode active material. As the positive electrode active material, the materials exemplified in the embodiment 1 above may be used.

The positive electrode active material may have a median diameter of 0.1 $\mu$m or more and 100 $\mu$m or less. When the median diameter of the positive electrode active material is 0.1 $\mu$m or more, the positive electrode active material and the solid electrolyte can be well dispersed in the positive electrode 20. Consequently, the charge and discharge characteristics of the battery 200 are improved. When the median diameter of the positive electrode active material is 100 $\mu$m or less, the lithium diffusion speed in the positive electrode active material is improved. Consequently, the battery 200 can operate at high output.

The median diameter of the positive electrode active material may be larger than that of the solid electrolyte. Consequently, the solid electrolyte and the positive electrode active material can be well dispersed.

In the positive electrode 20, the volume ratio of the positive electrode active material and the solid electrolyte, "v2: 100 - v2", may satisfy $30 \leq v2 \leq 95$, where v2 indicates the volume ratio of the positive electrode active material when the total volume of the positive electrode active material and the solid electrolyte included in the positive electrode 20 is defined as 100. When $30 \leq v2$ is satisfied, the battery 200 easily secures a sufficient energy density. When $v2 \leq 95$ is satisfied, the battery 200 can more easily operate at high output.

The positive electrode 20 may have a thickness of 10 $\mu$m or more and 500 $\mu$m or less. When the thickness of the positive electrode 20 is 10 $\mu$m or more, the battery 200 can easily secure a sufficient energy density. When the thickness of the positive electrode 20 is 500 $\mu$m or less, the battery 200 can more easily operate at high output.

The positive electrode active material may be covered by a covering material for reducing the interface resistance with the solid electrolyte. As the covering material, a material having low electron conductivity can be used. As the covering material, an oxide material, an oxide solid electrolyte, or the like can be used. As the covering material, the materials exemplified in the embodiment 1 above may be used.

The positive electrode 20 may include a conductive assistant for the purpose of improving the electron conductivity. As the conductive assistant, the materials exemplified in the embodiment 1 above may be used. The cost can be reduced by using a carbon material as the conductive assistant.

The negative electrode 40 includes, for example, an active material 10, a conductive fiber 11, a binder 12, and a solid electrolyte 13. The negative electrode 40 may have a thickness of 10 $\mu$m or more and 500 $\mu$m or less. When the thickness of the negative electrode 40 is 10 $\mu$m or more, the battery 200 can easily secure a sufficient energy density. When the thickness of the negative electrode 40 is 500 $\mu$m or less, the battery 200 can more easily operate at high output.

At least one selected from the group consisting of the positive electrode 20 and the electrolyte layer 30 may include a binder for the purpose of improving the adhesion between particles. As the binder, the materials exemplified in the embodiment 1 above may be used.

At least one selected from the group consisting of the positive electrode 20, the electrolyte layer 30, and the negative electrode 40 may include a nonaqueous electrolytic solution, a gel electrolyte, or an ionic liquid for the purpose of facilitating the transfer of lithium ions and improving the output property of the battery 200.

The nonaqueous electrolytic solution includes a nonaqueous solvent and a lithium salt dissolved in the nonaqueous solvent. As the nonaqueous solvent, for example, a cyclic carbonate solvent, a chain carbonate solvent, a cyclic ether solvent, a chain ether solvent, a cyclic ester solvent, a chain ester solvent, or a fluorine solvent can be used. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include $\gamma$-butyrolactone. Examples of the chain ester solvent include methyl acetate. Examples of the fluorine solvent include fluoroethylene carbonate, methyl fluoropropionate, fluorobenzene, fluoroethyl methyl carbonate, and fluorodimethylene carbonate. As the nonaqueous solvent, one nonaqueous solvent selected from these solvents may be used alone, or a mixture of two or more nonaqueous solvents selected from these solvents may be used.

The nonaqueous electrolytic solution may include at least one fluorine solvent selected from the group consisting of fluoroethylene carbonate, methyl fluoropropionate, fluorobenzene, fluoroethyl methyl carbonate, and fluorodimethylene carbonate.

Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. As the lithium salt, one lithium salt selected from these salts may be used alone, or a mixture of two or more lithium salts selected from these salts may be used. The concentration of the lithium salt in the nonaqueous electrolytic solution may be 0.5 mol/L or more and 2 mol/L or less.

As the gel electrolyte, a material obtained by impregnating a polymer material with a nonaqueous electrolytic solution can be used. Examples of the polymer material include polyethylene oxide, polyacrylonitrile, polyvinylidene fluoride, polymethyl methacrylate, and a polymer having an ethylene oxide bond.

The cation constituting the ionic liquid may be, for example, an aliphatic chain quaternary cation such as tetraalkylammonium and tetraalkylphosphonium, an aliphatic cyclic ammonium such as a pyrrolidinium, a morpholinium, an imidazolinium, a tetrahydropyrimidinium, a piperazinium, and a piperidinium, or a nitrogen-containing heterocyclic aromatic cation such as a pyridinium and an imidazolium. The anion constituting the ionic liquid may be, for example, $PF_6^-$, $BF_4^-$, $SbF_6^-$, $AsF_6^-$, $SO_3CF_3^-$, $N(SO_2F)_2^-$; $N(SO_2CF_3)_2^-$, $N(SO_2C_2F_5)_2^-$, $N(SO_2CF_3)(SO_2C_4F_9)^-$, or $C(SO_2CF_3)_3^-$. The ionic liquid may contain a lithium salt.

Examples of the shape of the battery 200 include a coin type, a cylindrical type, a square type, a sheet type, a button type, a flat type, and a stacked type.

The battery 200 in the embodiment 2 can be manufactured by, for example, the following method. First, a current collector for the positive electrode 20, a material for forming the positive electrode 20, a material for forming the electrolyte layer 30, a material for forming the negative electrode 40, and a current collector for the negative electrode 40 are provided. The material for forming the negative electrode 40 is, for example, the electrode material 100 of the embodiment 1. Using these materials, a stack composed of a positive electrode 20, an electrolyte layer 30, and a negative electrode 40 disposed in this order is produced by a known method. Consequently, a battery 200 can be manufactured.

EXAMPLES

The present disclosure will now be described in detail using Examples and Comparative Examples. The electrode and battery of the present disclosure are not limited to the following Examples.

(Comparative Example 1)

First, as a conductive fiber, a carbon nanotube (CNT) (VGCF-H) having an average fiber diameter of 150 nm was provided. As a binder, a styrene-butadiene random copolymer (SBR) (TUFDENE (registered trademark) 2100R, manufactured by Asahi Kasei Corp.) was provided. As a solvent, tetralin was provided. The CNT, the binder, and the solvent were mixed at a mass ratio below under conditions of 25°C. Specifically, these materials were mixed by adding the conductive fiber to a solution obtained by dissolving the binder in the solvent. Consequently, a slurry of Comparative Example 1 was obtained. In the obtained slurry, the rate of the mass of the binder to the mass of the CNT was 5 mass%.

<Mass rate>

CNT: 10 mass%
Binder: 0.50 mass%
Solvent: 89.50 mass%

(Comparative Examples 2 and 3 and Examples 1 to 9)

Slurries of Comparative Examples 2 and 3 and Examples 1 to 9 were obtained by the same method as in Comparative Example 1 except that the binders shown in Table 1 were used.

[Evaluation of styrene rate]

The styrene rate of the elastomer constituting the binder was measured by $^1$H NMR measurement. The measurement sample was prepared by dissolving elastomer in $CDCl_3$. $CDCl_3$ included 0.05% of TMS. $^1$H NMR measurement was performed under conditions of a resonance frequency of 500 MHz. From the obtained NMR spectrum, an integrated value of the peak derived from a styrene skeleton and an integrated value of the peak derived from a skeleton other than the styrene skeleton were specified. The styrene rate of elastomer was specified using the specified integrated values.

[Evaluation of slurry]

The slurries of Comparative Examples 1 to 3 and Examples 1 to 9 were evaluated for the dispersibility of the CNT by the following method. First, the produced slurry was applied on a glass substrate using an applicator. On this occasion, the gap was set to 100 μm. Subsequently, the obtained coated layer was dried by heating on a hot plate heated to 100°C for 10 minutes. The surface of the obtained dried film was observed in three fields of view with a laser microscope at a magnification of 50 times. The surface roughness (arithmetic average height Sa) of the dried surface in each field of view was measured, and the average thereof was calculated. The dispersibility of the CNT in a slurry was evaluated by the average of the Sa. The results are shown in Table 1. In Table 1, the circle mark (○) means that (the average of Sa) <_ 1.5 $\mu$m is satisfied; the triangle mark (Δ) means that 1.5 $\mu$m < (the average of Sa) <_ 2.2 $\mu$m is satisfied; and the x mark (×) means that 2.2 $\mu$m < (the average of Sa) is satisfied.

[Table 1]

| | Elastomer constituting binder | | | | | Slurry evaluation |
|---|---|---|---|---|---|---|
| | Type | Composition | Hydrogenation rate | Styrene rate (mass%) (*1) | Product No. | |
| Comparative Example 1 | A | SBR | 0% | 25 | TUFDENE 2100R | x |
| Comparative Example 2 | B | SBS | 0% | 30 | ASAPRENE T-411 | x |
| Comparative Example 3 | C | SEBS | 90% or more | 12 | TUFTEC H1221 | x |
| Example 1 | D | Hydrogenated SBR | 90% or more | 16 | DYNARON 2324P | Δ |
| Example 2 | E | SBBS | 30% or more and less than 50% | 30 | TUFTEC P1500 | Δ |
| Example 3 | F | SEBS | 90% or more | 20 | TUFTEC H1052 | ○ |
| Example 4 | G | SEBS | 90% or more | 29 | TUFTEC H1053 | ○ |
| Example 5 | H | SEBS | 90% or more | 42 | TUFTEC H1051 | ○ |
| Example 6 | I | SEBS | 90% or more | 32 | TUFTEC N504 | ○ |
| Example 7 | J | Modified SEBS | 90% or more | 30 | TUFTEC M1913 | ○ |
| Example 8 | K | SEEPS | 90% or more | 30 | SEPTON 4055 | ○ |
| Example 9 | L | SEEPS | 90% or more | 30 | SEPTON 4099 | ○ |
| (* 1) The content rate of repeating unit derived from styrene in elastomer. | | | | | | |

In Table 1, the details of the types A to L of the binder are as follows:

A: styrene-butadiene random copolymer (SBR) (TUFDENE (registered trademark) 2100R, manufactured by Asahi Kasei Corp.);
B: styrene-butadiene-styrene block copolymer (SBS) (ASAPRENE (registered trademark) T-411, manufactured by Asahi Kasei Corp.);
C: styrene-ethylene/butylene-styrene block copolymer (SEBS) (TUFTEC (registered trademark) H1221, manufactured by Asahi Kasei Corp.);
D: hydrogenated product of styrene-butadiene random copolymer (SBR) (DYNARON (registered trademark) 2324P, manufactured by JSR Corp.);
E: styrene-butadiene/butylene-styrene block copolymer (SBBS) (TUFTEC (registered trademark) P1500, manufactured by Asahi Kasei Corp.);
F: SEBS (TUFTEC (registered trademark) H1052, manufactured by Asahi Kasei Corp.);

G: SEBS (TUFTEC (registered trademark) H1053, manufactured by Asahi Kasei Corp.);
H: SEBS (TUFTEC (registered trademark) H1051, manufactured by Asahi Kasei Corp.);
I: SEBS (TUFTEC (registered trademark) N504, manufactured by Asahi Kasei Corp.);
J: modified SEBS (TUFTEC (registered trademark) M1913, manufactured by Asahi Kasei Corp.);
K: styrene-ethylene/ethylene/propylene-styrene block copolymer (SEEPS) (SEPTON (registered trademark) 4055, manufactured by Kuraray Co., Ltd.); and
L: SEEPS (SEPTON (registered trademark) 4099, manufactured by Kuraray Co., Ltd.).

As obvious from Table 1, the values of the arithmetic average height Sa of the surfaces of the dried films formed from the slurries of Examples were small compared to Comparative Examples. This demonstrates that in the slurries of Examples, aggregation of the conductive fibers was suppressed to improve the dispersibility compared to Comparative Examples. In other words, the results of Examples demonstrate that when an elastomer of the present embodiment is used as the binder, the dispersibility of conductive fibers is improved. It is demonstrated that, in particular, in the slurries of Examples 3 to 9 including SEBS or SEEPS of which the content rate of the repeating unit derived from styrene was 15 mass% or more, the dispersibility of the conductive fiber was more improved.

(Comparative Example 4)

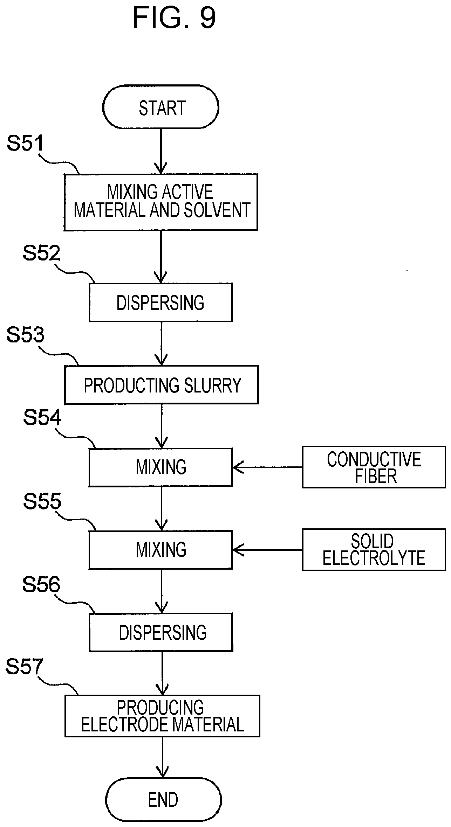

An electrode material of Comparative Example 4 was produced by the method shown in Fig. 9. Fig. 9 is a flow chart showing a method for manufacturing the electrode material of Comparative Example 4. Specifically, first, an active material and a solvent were mixed in step S51. As the active material, Si was used. As the solvent, tetralin was used. Subsequently, the obtained mixture was subjected to dispersion treatment in step S52. The dispersion treatment was performed using a high-speed homogenizer for 30 minutes. A slurry was obtained by the dispersion treatment of step S52 (step S53).
Subsequently, in step S54, the slurry and a conductive fiber were mixed. As the conductive fiber, a CNT (VGCF-H) having an average fiber diameter of 150 nm was used. Subsequently, in step S55, the obtained mixture was further mixed with a solid electrolyte. As the solid electrolyte, a sulfide solid electrolyte $Li_2S$-$P_2S_5$ was used. Subsequently, in step S56, the mixture obtained in step S55 was subjected to dispersion treatment. The dispersion treatment was performed using a high-speed homogenizer for 30 minutes. Consequently, an electrode material of Comparative Example 4 was obtained (step S57).

(Example 10)

An electrode material of Example 10 was produced by the method shown in Fig. 3. First, in step S01, a conductive fiber, a binder, and a solvent were mixed. Specifically, these materials were mixed by adding the conductive fiber to a solution obtained by dissolving the binder in the solvent. The conductive fiber and the solvent used were the same as those in Comparative Example 4. As the binder, SEBS (TUFTEC N504, manufactured by Asahi Kasei Corp.) was used. In step S02, a first slurry was produced by subjecting the obtained mixture to dispersion treatment (step S03). The dispersion treatment was performed using an ultrasonic homogenizer for 2 minutes.
Subsequently, in step S04, an active material and a solvent were mixed. The active material and the solvent used were the same as those in Comparative Example 4. In step S05, a second slurry was produced by subjecting the obtained mixture to dispersion treatment (step S06). The dispersion treatment was performed using a high-speed homogenizer for 30 minutes.
Subsequently, in step S07, the first slurry, the second slurry, and a solid electrolyte were mixed. The solid electrolyte used was the same as that in Comparative Example 4. Subsequently, in step S08, the mixture obtained in step S07 was subjected to dispersion treatment. The dispersion treatment was performed using a high-speed homogenizer for 30 minutes. Consequently, an electrode material of Example 10 was obtained (step S09).

(Example 11)

An electrode material of Example 11 was obtained by the same method as in Example 10 except that SEBS (TUFTEC H1051, manufactured by Asahi Kasei Corp.) was used as the binder.

[Measurement of electron conductivity]

The electron conductivity of the electrode materials of Comparative Example 4 and Examples 10 and 11 was measured by the following method. First, an electrode material was coated on a current collector. The obtained coated layer was dried to form an active material layer. Thus, an electrode was obtained. Subsequently, a pressure of 2 N·m was applied to the facing main surfaces of the electrode to press and bind the electrode. Subsequently, a voltage was applied to the electrode, and the current value at this time was measured. Specifically, the values of the voltage to be applied were set to 0.5 V, 1.0 V, and 2.0 V, and the current value at each of the voltage values was measured. The data obtained at three points were plotted in a graph to generate an approximate straight line. The resistance value of the electrode was calculated based on the slope of the approximate straight line. From this calculated value, the electron conductivity of the electrode was obtained. The results are shown in Table 2. The electron conductivity in Table 2 corresponds to the value when the electron conductivity measured in Comparative Example 4 was defined as 100.

[Table 2]

| | CNT average fiber diameter (nm) | Elastomer constituting binder | | | | | Mfg. method | Electron conductivity |
|---|---|---|---|---|---|---|---|---|
| | | Type | Composition | Hydrogenation rate | Styrene rate (mass%) (*1) | Product No. | | |
| Comparative Example 4 | 150 | - | - | - | - | - | Fig. 9 | 100 |
| Example 10 | 150 | I | SEBS | 90% or more | 32 | TUFTEC N504 | Fig. 3 | 155 |
| Example 11 | 150 | H | SEBS | 90% or more | 42 | TUFTEC H1051 | Fig. 3 | 162 |

(*1) The content rate of repeating unit derived from styrene in elastomer.

As obvious from Table 2, in the electrode materials of Examples 10 and 11, the electron conductivity increased by about 1.5 times or more compared to Comparative Example 4. It is assumed that this is due to the improved dispersibility of the conductive fiber in the electrode material by using the elastomer of the present embodiment as the binder.

(Comparative Example 5)

An electrode material of Comparative Example 5 was obtained by the same method as in Comparative Example 4 except that a CNT (TUBALL, manufactured by OCSiAl) having an average fiber diameter of 1.5 nm was used as the conductive fiber.

(Example 12)

An electrode material of Example 12 was obtained by the same method as in Example 10 except that a CNT having an average fiber diameter of 1.5 nm was used as the conductive fiber.

(Example 13)

An electrode material of Example 13 was obtained by the same method as in Example 11 except that a CNT having an average fiber diameter of 1.5 nm was used as the conductive fiber.

[Measurement of electron conductivity]

The electron conductivity of the electrode materials of Comparative Example 5 and Examples 12 and 13 was measured by the method described above. The results are shown in Table 3. The electron conductivity in Table 3 corresponds to the value when the electron conductivity measured in Comparative Example 5 was defined as 100.

[Table 3]

| | CNT average fiber diameter (nm) | Elastomer constituting binder | | | | | Mfg. method | Electron conductivity |
|---|---|---|---|---|---|---|---|---|
| | | Type | Composition | Hydrogenation rate | Styrene rate (mass%) (*1) | Product No. | | |
| Comparative Example 5 | 1.5 | - | - | - | - | - | Fig. 9 | 100 |
| Example 12 | 1.5 | I | SEBS | 90% or more | 32 | TUFTEC N504 | Fig. 3 | 113 |
| Example 13 | 1.5 | H | SEBS | 90% or more | 42 | TUFTEC H1051 | Fig. 3 | 162 |
| (*1) The content rate of repeating unit derived from styrene in elastomer. | | | | | | | | |

As obvious from Table 3, in the electrode materials of Examples 12 and 13, the electron conductivity was enhanced compared to Comparative Example 5. It is assumed that this is due to the improved dispersibility of the conductive fiber in the electrode material by using the elastomer of the present embodiment as the binder.

It is demonstrated from Tables 2 and 3 that the electrode material of the present embodiment is suitable for producing an electrode with improved electron conductivity. In particular, it can be read from Tables 2 and 3 that the elastomer having a high content rate of the repeating unit derived from styrene is suitable for improving the electron conductivity of an electrode.

Industrial Applicability

The electrode material of the present disclosure can be used in, for example, an all-solid-state lithium-ion secondary battery. In a battery including an electrode formed from the electrode material, not only the energy density is high, but also the cycle characteristics tend to be excellent.

Reference Signs List

| | |
|---|---|
| 10 | active material |
| 11 | conductive fiber |
| 12 | binder |
| 13 | solid electrolyte |
| 14 | solvent |
| 20 | positive electrode |
| 30 | electrolyte layer |
| 40 | negative electrode |
| 100 | electrode material |
| 200 | battery |

**Claims**

1. An electrode material comprising:

   an active material;
   a conductive fiber including a carbon material; and
   a binder including an elastomer,
   wherein
   the elastomer is a hydrogenated product and includes a repeating unit having an aromatic ring, and
   a content rate of the repeating unit in the elastomer is 15 mass% or more.

2. The electrode material according to claim 1, wherein
   the conductive fiber includes a carbon nanotube.

3. The electrode material according to claim 1 or 2, wherein
   the conductive fiber has an average fiber diameter of 300 nm or less.

4. The electrode material according to any one of claims 1 to 3, wherein
   the elastomer is a thermoplastic elastomer.

5. The electrode material according to any one of claims 1 to 4, wherein
   the elastomer includes a first block including the repeating unit having the aromatic ring and a second block including a repeating unit derived from a conjugated diene.

6. The electrode material according to any one of claims 1 to 5, wherein
   the repeating unit having the aromatic ring is a repeating unit derived from styrene.

7. The electrode material according to any one of claims 1 to 6, wherein

the elastomer includes at least one selected from the group consisting of a styrene-ethylene/butylene-styrene block copolymer (SEBS) and a styrene-ethylene/ethylene/propylene-styrene block copolymer (SEEPS).

8. The electrode material according to any one of claims 1 to 7, wherein
the elastomer has a hydrogenation rate of 90% or more.

9. The electrode material according to any one of claims 1 to 8, wherein
the content rate of the repeating unit having the aromatic ring in the elastomer is 20 mass% or more.

10. The electrode material according to any one of claims 1 to 9, further comprising:
a solid electrolyte.

11. The electrode material according to claim 10, wherein
the solid electrolyte has lithium-ion conductivity.

12. The electrode material according to any one of claims 1 to 11, further comprising:
a solvent.

13. A method for manufacturing the electrode material according to any one of claims 1 to 12,
the manufacturing method comprising:
producing a slurry including the conductive fiber and the binder.

14. The manufacturing method according to claim 13, further comprising:
mixing the slurry including the conductive fiber and the binder with a slurry including at least one selected from the group consisting of an active material and a solid electrolyte.

15. A battery comprising:

a positive electrode;
a negative electrode; and
an electrolyte layer located between the positive electrode and the negative electrode,
wherein
at least one selected from the group consisting of the positive electrode and the negative electrode includes an active material, a conductive fiber including a carbon material, and a binder including an elastomer,
the elastomer is a hydrogenated product and includes a repeating unit having an aromatic ring, and
a content rate of the repeating unit in the elastomer is 15 mass% or more.

16. The battery according to claim 15, wherein
the electrolyte layer includes a solid electrolyte.

# FIG. 1

# FIG. 2

UNSATURATED PRODUCT

SBR

$-[(CH_2-CH)_x \cdots (CH_2-CH=CH-CH_2)_y]-$ (i)
RANDOM COPOLYMER

SIS

$-(CH_2-CH)_x-(CH_2-CH=CH-CH_2)_m-(CH_2-CH)_y-$ (ii)
CH_3

SBS

$-(CH_2-CH)_x-\{(CH_2-CH=CH-CH_2)_m \cdots (CH_2-CH)_n\}_y-(CH_2-CH)_z-$ (iii)
CH=CH_2
RANDOM COPOLYMER

HYDROGENATED PRODUCT

HYDROGENATED SBR

$-[(CH_2-CH)_x \cdots (CH_2-CH_2-CH_2-CH_2)_y]-$ (iv)
RANDOM COPOLYMER

SEPS

$-(CH_2-CH)_x-(CH_2-CH-CH_2-CH_2)_m-(CH_2-CH)_y-$ (v)
CH_3

SEBS

$-(CH_2-CH)_x-\{(CH_2-CH_2-CH_2-CH_2)_m \cdots (CH_2-CH)_n\}_y-(CH_2-CH)_z-$ (vi)
CH_2
CH_3
RANDOM COPOLYMER

SEEPS

$-(CH_2-CH)_x-\{(CH_2-CH-CH_2-CH_2)_m \cdots (CH_2-CH_2-CH_2-CH_2)_n\}_y-(CH_2-CH)_z-$ (vii)
CH_3
RANDOM COPOLYMER

# FIG. 3

START

S04 — MIXING ACTIVE MATERIAL AND SOLVENT

S01 — MIXING CONDUCTIVE FIBER, BINDER, AND SOLVENT

S05 — DISPERSING

S02 — DISPERSING

S06 — PRODUCING SECOND SLURRY

S03 — PRODUCTING FIRST SLURRY

SOLID ELECTROLYTE

S07 — MIXING

S08 — DISPERSING

S09 — PRODUCING ELECTRODE MATERIAL

END

# FIG. 4

START

S04 — MIXING ACTIVE MATERIAL AND SOLVENT

S01 — MIXING CONDUCTIVE FIBER, BINDER, AND SOLVENT

S05 — DISPERSING

S02 — DISPERSING

S06 — PRODUCING SECOND SLURRY

S03 — PRODUCTING FIRST SLURRY

S07 — MIXING

S10 — DISPERSING

S11 — MIXING

SOLID ELECTROLYTE

S12 — DISPERSING

S09 — PRODUCING ELECTRODE MATERIAL

END

# FIG. 5

START

S04 — MIXING ACTIVE
MATERIAL AND SOLVENT

S01 — MIXING CONDUCTIVE
FIBER, BINDER,
AND SOLVENT

S05 — DISPERSING

S02 — DISPERSING

S06 — PRODUCING
SECOND SLURRY

S03 — PRODUCING
FIRST SLURRY

S21 — MIXING ← SOLID
ELECTROLYTE

S23 — MIXING ← S22 — DISPERSING

S24 — DISPERSING

S09 — PRODUCING
ELECTRODE MATERIAL

END

# FIG. 6

START

S04 — MIXING ACTIVE MATERIAL AND SOLVENT

S01 — MIXING CONDUCTIVE FIBER, BINDER, AND SOLVENT

S05 — DISPERSING

S02 — DISPERSING

S06 — PRODUCING SECOND SLURRY

S03 — PRODUCING FIRST SLURRY

S31 — MIXING ← SOLID ELECTROLYTE

S32 — DISPERSING

S33 — MIXING

S34 — DISPERSING

S09 — PRODUCING ELECTRODE MATERIAL

END

# FIG. 7

```
                        START

S04                      S41                     S01
MIXING ACTIVE       MIXING SOLID         MIXING CONDUCTIVE
MATERIAL AND        ELECTROLYTE          FIBER, BINDER,
SOLVENT             AND SOLVENT          AND SOLVENT

S05                      S42                     S02
DISPERSING          DISPERSING           DISPERSING

S06                      S43                     S03
PRODUCING           PRODUCING            PRODUCTING
SECOND SLURRY       THIRD SLURRY         FIRST SLURRY

                         S44
                    MIXING

                         S45
                    DISPERSING

S09
                    PRODUCING
                    ELECTRODE MATERIAL

                        END
```

# FIG. 8

# FIG. 9

```
                    ┌─────────┐
                    │  START  │
                    └────┬────┘
                         │
S51    ┌─────────────────▼─────────────────┐
       │      MIXING ACTIVE                 │
       │   MATERIAL AND SOLVENT             │
       └─────────────────┬─────────────────┘
                         │
S52          ┌───────────▼───────────┐
             │     DISPERSING        │
             └───────────┬───────────┘
                         │
S53       ┌──────────────▼──────────────┐
          │    PRODUCING SLURRY         │
          └──────────────┬──────────────┘
                         │
S54          ┌───────────▼───────────┐        ┌──────────────┐
             │      MIXING           │◄───────│ CONDUCTIVE   │
             └───────────┬───────────┘        │   FIBER      │
                         │                     └──────────────┘
S55          ┌───────────▼───────────┐        ┌──────────────┐
             │      MIXING           │◄───────│   SOLID      │
             └───────────┬───────────┘        │ ELECTROLYTE  │
                         │                     └──────────────┘
S56          ┌───────────▼───────────┐
             │     DISPERSING        │
             └───────────┬───────────┘
                         │
S57    ┌─────────────────▼─────────────────┐
       │        PRODUCING                   │
       │    ELECTRODE MATERIAL              │
       └─────────────────┬─────────────────┘
                         │
                    ┌────▼────┐
                    │   END   │
                    └─────────┘
```

## INTERNATIONAL SEARCH REPORT

International application No.

**PCT/JP2022/006554**

**A.     CLASSIFICATION OF SUBJECT MATTER**

*H01M 4/139*(2010.01)i; *H01M 4/62*(2006.01)i; *H01M 10/052*(2010.01)i; *H01M 10/0562*(2010.01)i
FI:   H01M4/139; H01M4/62 Z; H01M10/052; H01M10/0562

According to International Patent Classification (IPC) or to both national classification and IPC

**B.     FIELDS SEARCHED**

Minimum documentation searched (classification system followed by classification symbols)

H01M4/139; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2019/181869 A1 (ZEON CORPORATION) 26 September 2019 (2019-09-26) claims, paragraphs [0019]-[0033], [0072]-[0081], examples 1-11 | 1-4, 6, 8-9, 12-13, 15 |
| Y | claims, paragraphs [0019]-[0033], [0072]-[0081], examples 1-11 | 1-16 |
| Y | JP 2010-262764 A (TOYOTA MOTOR CORP) 18 November 2010 (2010-11-18) claims, paragraphs [0029]-[0036], [0046]-[0057] | 1-16 |
| A | JP 2021-7109 A (LG CHEM, LTD.) 21 January 2021 (2021-01-21) | 1-16 |
| A | JP 2009-1830 A (NISSIN KOGYO CO LTD) 08 January 2009 (2009-01-08) | 1-16 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **13 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT | | International application No. |
|---|---|---|
| Information on patent family members | | PCT/JP2022/006554 |

| Patent document cited in search report | | | Publication date (day/month/year) | Patent family member(s) | | | Publication date (day/month/year) |
|---|---|---|---|---|---|---|---|
| WO | 2019/181869 | A1 | 26 September 2019 | US 2021/0005894 A1 claims, paragraphs [0031]-[0054], [0139]-[0157], examples 1-11 EP 3770204 A1 CN 111770953 A KR 10-2020-0134229 A | | | |
| JP | 2010-262764 | A | 18 November 2010 | (Family: none) | | | |
| JP | 2021-7109 | A | 21 January 2021 | US 2018/0219212 A1 WO 2017/099481 A1 EP 3319151 A1 KR 10-2017-0069153 A CN 107925056 A | | | |
| JP | 2009-1830 | A | 08 January 2009 | (Family: none) | | | |

Form PCT/ISA/210 (patent family annex) (January 2015)

**REFERENCES CITED IN THE DESCRIPTION**

**Patent documents cited in the description**

- JP 2011134675 A
- JP 2020145034 A